# EUROPEAN PATENT APPLICATION

(11) **EP 4 152 696 A1**
(43) Date of publication of application: **22.03.2023**
(21) Application number: 21822226.3
(22) Date of filing: 20.05.2021
(51) Int. Cl.: H04L 12/24, H04W 24/00, H04W 36/00

(54) **RELAY COMMUNICATION METHOD AND RELATED DEVICE**

(30) Priority: 12.06.2020 CN 202010537124; 23.10.2020 CN 202011150220
(71) Applicant: Huawei Technologies Co., Ltd., Longgang District, Shenzhen, Guangdong 518129 (CN)
(72) Inventor: LIU, Jing, Shenzhen, Guangdong 518129 (CN); ZHU, Yuanping, Shenzhen, Guangdong 518129 (CN)
(74) Representative: Pfenning, Meinig & Partner mbB
(86) International application number: PCT/CN2021/094971
(87) International publication number: WO 2021/249153

(57) **Abstract**

Embodiments of this application provide a communication method and a related device. The method includes: A network management device receives first information from an integrated access and backhaul (Integrated access and backhaul, IAB) node; and then generates first configuration information based on the first information, and sends the first configuration information to the IAB node. According to the method, an IAB node in an IAB network can obtain accurate configuration information. This ensures running of the IAB network.

## Description

This application claims priority to Chinese Patent Application No. 202010537124.9, filed with the China National Intellectual Property Administration on June 12, 2020 and entitled "RELAY COMMUNICATION METHOD AND RELATED DEVICE", and to Chinese Patent Application No. 202011150220.4, filed with the China National Intellectual Property Administration on October 23, 2020 and entitled "RELAY COMMUNICATION METHOD AND RELATED DEVICE", which are incorporated herein by reference in their entireties.

### TECHNICAL FIELD

This application relates to the field of communication technologies, and more specifically, to a relay communication method and a related device.

### BACKGROUND

Concepts of a central unit (Central Unit, CU) and a distributed unit (Distributed Unit, DU) are introduced into 5th generation (5th generation, 5G) communication. A base station, for example, a next generation NodeB (generation NodeB, gNB), may be divided, based on protocol layers, into one gNB-CU and at least one gNB-DU connected to the gNB-CU. The gNB-DU may include a radio link control (Radio Link Control, RLC) layer function, a MAC layer function, and a physical (Physical, PHY) layer function. The CU may include a packet data convergence protocol (Packet Data Convergence Protocol, PDCP) layer function, a service data adaptation protocol (Service Data Adaptation Protocol, SDAP) layer function, and a radio resource control (Radio Resource Control, RRC) layer function. The gNB-CU and the gNB-DU are connected in a wired manner, and communicate with each other through an F1 interface.

A network management device in a network is responsible for existing network planning and deployment. For a base station in a CU-DU separation architecture, for example, a gNB, a topology relationship between a gNB-CU and a gNB-DU of the base station is determined by the network management device, and the network management device separately configures the gNB-CU and the gNB-DU. For example, the network management device sends configuration information to the gNB-DU. The configuration information may include: a gNB-DU identifier (gNB-DU ID), a gNB-DU name (gNB-DU Name), an identifier (gNB ID) of the base station to which the gNB-DU belongs, a base station identifier length (gNB ID length) of the base station to which the gNB-DU belongs, a DU end internet protocol (internet protocol, IP) address corresponding to an F1 interface (namely, a local IP address of the gNB-DU on the F1 interface), a CU end IP address corresponding to the F1 interface (namely, a peer IP address of the gNB-DU on the F1 interface, in other words, a local IP address of the gNB-CU on the F1 interface, because a peer end of the gNB-DU on the F1 interface is the gNB-CU), a cell local identifier (cell local identifier, cellLocalId), a public land mobile network identifier list (public land mobile network identifier list, PLMN Id List), a single network slice selection assistance information list (Single Network Slice Selection Assistance Information list, sNSSAI List), a physical cell identifier (physical cell identifier, PCI), a physical cell identifier (physical cell identifier, PCI), a tracking area code (tracking area code, TAC), an uplink/downlink frequency, a synchronization signal and PBCH block (synchronization signal and physical broadcast channel block, SSB) frequency, an SSB period, an SSB carrier spacing, an SSB offset (Offset), and SSB duration (Duration).

In an integrated access and backhaul (Integrated access and backhaul, IAB) network, a cell identifier (CellIdentity) of a cell served by an IAB node includes a first base station identifier, and a cell served by an IAB donor connected to the IAB node includes a second base station identifier. For normal running of the IAB network, it generally needs to be ensured that the first base station identifier is equal to the second base station identifier. After the IAB node is connected to the IAB donor, for a terminal served by the IAB node, the cell served by the IAB node may be considered as the cell served by the IAB donor.

To ensure normal routing of data, an IP address of the IAB node and an IP address of an IAB donor-DU connected to the IAB node need to belong to a same network segment or have a same network prefix.

However, because the IAB-DU and a donor-CU are wirelessly connected, the IAB node may randomly choose to be connected to different IAB donors, or be handed over between different IAB donors. As a result, the network management device cannot learn of topology information (for example, information about the IAB donor connected to the IAB node) in the current IAB network in a timely manner, and cannot provide accurate configuration information for the IAB node in the IAB network.

### SUMMARY

In view of this, this application provides a communication method and a related device, so that a network management device can provide accurate configuration information for an IAB node in an IAB network.

According to a first aspect, this application provides a communication method. The method may include: A network management device receives first information from an integrated access and backhaul IAB node; the network management device generates first configuration information of the IAB node based on the first information; and the network management device sends the first configuration information to the IAB node. In this method, for example, beneficial effects include: An IAB node in an IAB network can obtain accurate configuration information. This ensures running of the IAB network.

In a feasible design, the first information includes: cell information of a cell accessed by the IAB node, and/or a base station identifier of an IAB donor of the IAB node. In this design, for example, beneficial effects include: The network management device can obtain information about the IAB donor of the IAB node, and generate appropriate configuration information for the IAB based on the information about the IAB donor.

In a feasible design, the cell information includes at least one of the following: a cell identifier, a cell global identifier, and a physical cell identifier.

In a feasible design, the first information includes location information or neighboring cell information of the IAB node. In this design, for example, beneficial effects include: The network management device can obtain information about an IAB donor nearby the IAB node, and generate a corresponding set of pieces of appropriate configuration information for each candidate IAB donor, so that the IAB node can perform appropriate independent selection.

In a feasible design, the first configuration information includes X pieces of configuration information, the X pieces of configuration information respectively correspond to X candidate IAB donors, and X is a positive integer. The network management device receives third configuration information or an index corresponding to the third configuration information from the IAB node, where the third configuration information is determined by the IAB node based on the first configuration information, and there is a correspondence between the third configuration information and an IAB donor selected by the IAB node. In this design, for example, beneficial effects include: Configuration information independently selected by the IAB node may be aligned between the network management device and the IAB node. The configuration information independently selected by the IAB node is exchanged by using the index, so that signaling overheads can be reduced.

In a feasible design, the first configuration information includes at least one of the following: a local internet protocol IP address of the IAB node on an F1 interface, a peer IP address of the IAB node on the F1 interface, and cell information of a cell served by the IAB node, where a local end of the F1 interface is a distributed unit DU end of the IAB node, and a peer end of the F1 interface is a central unit CU end of the IAB donor of the IAB node. In this design, for example, beneficial effects include: It can be ensured that an IP address of the IAB node and an IP address of an IAB donor-DU belong to a same network segment or have a same network prefix (prefix), and ensured that a cell identifier of the cell served by the IAB node includes the base station identifier of the IAB donor.

In a feasible design, that the network management device generates first configuration information of the IAB node based on the first information includes: The network management device determines the IAB donor of the IAB node based on the first information; and the network management device generates the first configuration information based on the IAB donor.

In a feasible design, that the network management device generates the first configuration information based on the IAB donor includes: The network management device determines the local IP address of the IAB node on the F1 interface based on an IAB donor- DU; and/or the network management device determines, based on an IAB donor-CU, the cell information of the cell served by the IAB node. In this design, for example, beneficial effects include: It can be ensured that the cell identifier of the cell served by the IAB node includes the base station identifier of the IAB donor.

In a feasible design, when the first configuration information does not include the local IP address of the IAB node on the F1 interface, the method includes: The network management device further sends first indication information to the IAB node, where the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1 -C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, where X, Y, Z, M, and N are positive integers, the F1-C interface is a control plane interface of the F1 interface, and the F1-U interface is a user plane interface of the F1 interface. In this design, for example, beneficial effects include: The IAB node can request appropriate IP address information from the IAB donor under unified control of the network management device.

In a feasible design, the network management device sends a preconfigured cell set to a target IAB donor of the IAB node; and the network management device receives cell information from the IAB node, where the cell information is determined by the target IAB donor of the IAB node for the IAB node in the preconfigured cell set. In this design, for example, beneficial effects include: In a scenario in which the IAB node performs handover of the IAB donor, cell configuration information can be more quickly obtained.

In a feasible design, the network management device receives second indication information from the IAB node; and the network management device determines, based on the second indication information, that a physical cell identifier PCI of the IAB node remains unchanged. In this design, for example, beneficial effects include: This avoids updating the PCI in an IAB node handover process, reduces impact on communication between the IAB node and a child node of the IAB node, improves communication efficiency, and improves user experience.

In a feasible design, the network management device receives third indication information from the IAB node; and the network management device determines, based on the third indication information, whether the IAB node is the IAB node. In this design, for example, beneficial effects include: The network management device can learn of a status of the IAB node in a timely manner, and control the IAB node.

In a feasible design, the network management device receives fourth indication information from the IAB node, where the fourth indication information includes a status of the cell served by the IAB node, and the status of the cell served by the IAB node includes: the cell is powered off or the cell is in a discontinuous reception DTX state; and the network management device determines, based on the fourth indication information, the status of the cell served by the IAB node. In this design, for example, beneficial effects include: The network management device can learn of the status of the IAB node in a timely manner, and control the IAB node.

In a feasible design, when the status of the cell served by the IAB node is that the cell is in the DTX state, the fourth indication information further includes SSB information of the cell served by the IAB node.

According to a second aspect, this application provides a communication method. The method may include: An integrated access and backhaul IAB node sends first information to a network management device; and the IAB node receives first configuration information from the network management device.

In a feasible design, the first information includes: cell information of a cell accessed by the IAB node, and/or a base station identifier of an IAB donor of the IAB node.

In a feasible design, the cell information includes at least one of the following: a cell identifier, a cell global identifier, and a physical cell identifier.

In a feasible design, the first information includes location information or neighboring cell information of the IAB node.

In a feasible design, the first configuration information includes X pieces of configuration information, the X pieces of configuration information respectively correspond to X candidate IAB donors, and X is a positive integer. The method further includes: The IAB node selects an IAB donor; the IAB node determines configuration information that is in the first configuration information and that corresponds to the IAB donor as third configuration information; and the IAB node sends the third configuration information or an index corresponding to the third configuration information to the network management device.

In a feasible design, the first configuration information includes at least one of the following: a local internet protocol IP address of the IAB node on an F1 interface, a peer IP address of the IAB node on the F1 interface, and cell information of a cell served by the IAB node, where a local end of the F1 interface is a distributed unit DU end of the IAB node, and a peer end of the F1 interface is a central unit CU end of the IAB donor of the IAB node.

In a feasible design, when the first configuration information does not include the local IP address of the IAB node on the F1 interface, the method includes: The IAB node further receives first indication information from the network management device, where the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, where X, Y, Z, M, and N are positive integers, the F1-C interface is a control plane interface of the F1 interface, and the F1-U interface is a user plane interface of the F1 interface.

In a feasible design, the IAB node sends second information to the IAB donor, where the second information is used to request the IP address type from the IAB donor; or the second information is used to request the IP address prefix from the IAB donor; or the second information is used to request the X IP addresses from the IAB donor; or the second information is used to request, from the IAB donor, the Y IP addresses used for the F1-C interface or the F1-C service; or the second information is used to request, from the IAB donor, the Z IP addresses used for the F1-U interface or the F1-U service; or the second information is used to request, from the IAB donor, the IP address prefix used for the F1-C interface or the F1-C service; or the second information is used to request, from the IAB donor, the IP address prefix used for the F1-U interface or the F1-U service, where X, Y, Z, M, and N are positive integers, the F1-C interface is the control plane interface of the F1 interface, and the F1-U interface is the user plane interface of the F1 interface.

In a feasible design, the IAB node receives second configuration information from the IAB donor, where the second configuration information includes at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

In a feasible design, the IAB node sends the second configuration information to the network management device. In this design, for example, beneficial effects include: Configuration information allocated by the IAB donor node to the IAB node may be aligned between the network management device and the IAB node.

In a feasible design, the IAB node sends second indication information to the network management device, where the second indication information includes the location information of the IAB node and/or the neighboring cell information of the IAB node; or the second indication information is used to indicate that a PCI of the cell served by the IAB node remains unchanged.

In a feasible design, the IAB node sends third indication information to the network management device, where the third indication information is used to indicate whether the node is the IAB node.

In a feasible design, the IAB node sends fourth indication information to the network management device, where the fourth indication information includes a status of the cell served by the IAB node, and the status of the cell served by the IAB node includes: the cell is powered off or the cell is in a discontinuous reception DTX state.

In a feasible design, when the status of the cell served by the IAB node is that the cell is in the DTX state, the fourth indication information further includes SSB information of the cell served by the IAB node.

According to a third aspect, this application provides an apparatus. The apparatus may include at least one processor and an interface circuit. When related program instructions are executed in the at least one processor, the communication apparatus is enabled to implement the method according to any one of the first aspect or the second aspect and the designs of the first aspect or the second aspect. The apparatus may be a terminal device or a network device, or a chip in the terminal device or the network device in the method according to any one of the first aspect or the second aspect and the designs of the first aspect or the second aspect. Optionally, the communication apparatus may further include at least one memory, and the memory stores the related program instructions.

According to a fourth aspect, this application provides a computer-readable storage medium. The computer-readable storage medium stores related program instructions; and when the related program instructions are run, the communication apparatus is enabled to implement the method according to any one of the first aspect or the second aspect and the designs of the first aspect or the second aspect.

According to a fifth aspect, this application provides a computer program product. The computer program product includes related program instructions; and when the related program instructions are executed, the method according to any one of the first aspect and the designs of the first aspect is implemented.

According to a sixth aspect, this application provides a communication apparatus. The apparatus is configured to perform the method according to any one of the first aspect or the second aspect and the designs of the first aspect or the second aspect.

### BRIEF DESCRIPTION OF DRAWINGS

The accompanying drawings, which may be included in this specification and constitute a part of this specification, together with this specification show example embodiments, or features and aspects of this application, and are used to explain principles of this application. It is clear that the accompanying drawings in the following descriptions merely show some embodiments of this application, and a person of ordinary skill in the art can derive other drawings from these accompanying drawings without creative efforts.
FIG. 1 is a schematic diagram of a possible communication system according to this application;
FIG. 2 is a schematic diagram of an IAB donor according to an embodiment of this application;
FIG. 3 is a schematic diagram of a control plane protocol stack in an IAB network according to an embodiment of this application;
FIG. 4 is a schematic diagram of a user plane protocol stack in an IAB network according to an embodiment of this application;
FIG. 5 is a schematic diagram of IAB node handover according to an embodiment of this application;
FIG. 6 is a schematic diagram of a communication method according to an embodiment of this application;
FIG. 7 is a schematic diagram of a communication method according to an embodiment of this application;
FIG. 8 is a schematic diagram of a communication method according to an embodiment of this application;
FIG. 9 is a schematic diagram of a communication method according to an embodiment of this application;
FIG. 10 is a schematic diagram of a communication method according to an embodiment of this application;
FIG. 11 is a schematic diagram of a communication method according to an embodiment of this application;
FIG. 12 is a schematic diagram of a communication method according to an embodiment of this application;
FIG. 13 is a schematic diagram of a communication method according to an embodiment of this application;
FIG. 14 is a schematic block diagram of a communication apparatus according to an embodiment of this application;
FIG. 15 is a schematic block diagram of a communication apparatus according to an embodiment of this application; and
FIG. 16 is a schematic block diagram of an apparatus according to an embodiment of this application.

### DESCRIPTION OF EMBODIMENTS

In descriptions of this application, terms such as "first", "second", "operation 201A", or "operation 202A" are merely used for distinguishing and description and for ease of organizing this specification. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

Thresholds, thresholds, offsets, preset values, or the like of user equipment in this application may be configured by a network device, or may be stored in user equipment when the user equipment is delivered from a factory, or may be standard-specified or standard-defined. Values of these thresholds, thresholds, offsets, or preset values may be 0.

In this application, the terms "include", "contain", and any other variants thereof are intended to cover the non-exclusive inclusion. For example, a process/method that includes a series of steps or a system/product/device that includes a series of units is not necessarily limited to those expressly listed steps or units, but may include other steps or units not expressly listed or inherent to these processes/methods/products/devices.

The solutions provided in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system, a new radio (new radio, NR) system, or another network system that can be used to provide a mobile communication service. This is not limited in this application.

Compared with a 4th generation mobile communication system, 5th generation (5G) mobile communication imposes stricter requirements on various network performance indicators in an all-round way. For example, a capacity indicator is increased by 1000 times, wider coverage is required, and ultra-high reliability and an ultra-low latency are required. In one aspect, in view of rich frequency resources on a high-frequency carrier, networking by using high-frequency small cells is increasingly popular in a hotspot area to meet an ultra-high capacity requirement of 5G. The high-frequency carrier has a poor propagation characteristic, is severely attenuated due to blocking, and has small coverage. Therefore, a large quantity of small cells need to be densely deployed. Correspondingly, it is quite costly to provide fiber backhaul for the large quantity of small cells that are densely deployed, and construction is difficult. Therefore, an economical and convenient backhaul solution is required. In another aspect, from a perspective of a wide coverage requirement, it is difficult and costly to deploy optical fibers to provide network coverage in some remote areas. Therefore, a flexible and convenient access and backhaul solution also needs to be designed. An integrated access and backhaul (Integrated access and backhaul, IAB) technology provides an idea to resolve the foregoing two problems: A wireless transmission solution is used for both an access link (Access Link) and a backhaul link (Backhaul Link), to avoid optical fiber deployment. In an IAB network, a relay node RN (RN, Relay Node) or an IAB node (IAB node) may provide a wireless access service for user equipment (UE, User equipment). Service data of the UE is transmitted by the IAB node through a wireless backhaul link to a connected donor node (IAB donor) or a donor base station (DgNB, Donor gNodeB). An antenna can be shared by using the IAB node for access and backhaul, to reduce a quantity of antennas of a base station.

The following describes embodiments of this application with reference to the accompanying drawings. Features or content marked by dashed lines in the accompanying drawings may be understood as optional operations or optional structures in embodiments of this application.

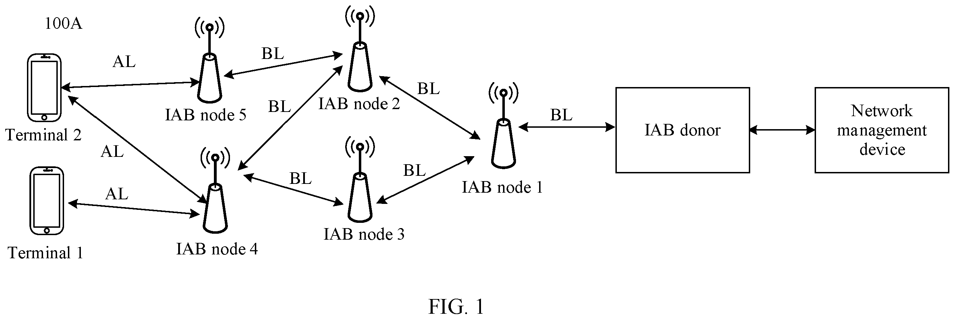

The user equipment in FIG. 1 may be an access terminal device, a subscriber unit, a subscriber station, a mobile station, a mobile station, a remote station, a remote terminal device, a mobile device, a user terminal device, a wireless terminal device, a user agent, a user apparatus, or the like. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (such as a smart watch or a smart band), smart furniture or a home appliance, a terminal device in a 5G network, a terminal device in a future evolved public land mobile network (public land mobile network, PLMN), a vehicle device in vehicle-to-everything (vehicle-to-everything, V2X), a customer premises equipment (customer premises equipment, CPE), or the like. A specific implementation form of the user equipment is not limited in this application.

The IAB node in FIG. 1 may include an MT (mobile termination, mobile termination, IAB-MT for short) and a DU (distributed unit, DU, IAB-DU for short). When facing a parent node of the IAB node, the IAB node may be considered as a terminal device, namely, a role of the MT. When facing a child node of the IAB node (where the child node may be another IAB node or common UE), the IAB node may be considered as a network device, namely, a role of the DU.

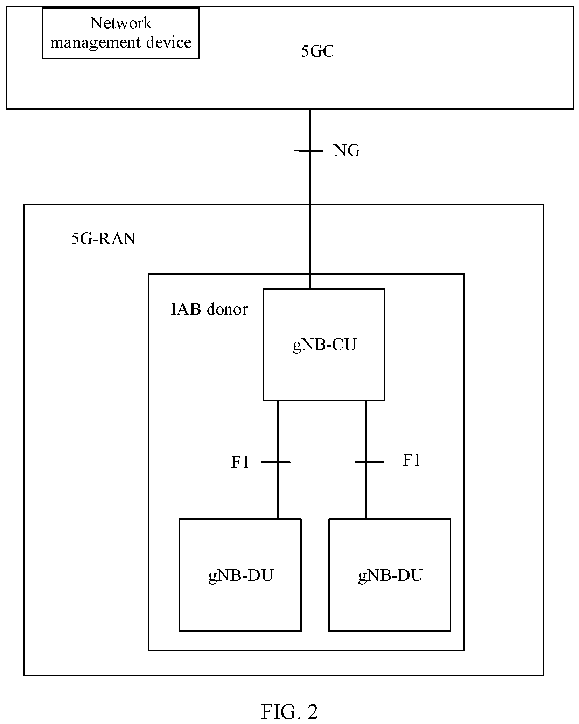

An IAB donor (IAB donor) in FIG. 1 may be a donor base station, and the IAB donor may be referred to as a DgNB (namely, a donor gNodeB) for short in a 5G network. The IAB donor may be a complete entity, or may exist in a form in which a central unit (central unit, CU) (Donor-CU or gNB-CU for short in this application) and a distributed unit (distributed unit, DU) (Donor-DU or gNB-DU for short in this application) are separated. As shown in FIG. 2, the IAB donor may be a gNB located in a 5G radio access network (5G radio access network, 5G RAN). The IAB donor may include a gNB-CU and a gNB-DU. The gNB-CU and the gNB-DU are connected through an F1 interface, and the F1 interface may further include a control plane interface (F1-C) and a user plane interface (F1-U). The CU and a core network are connected through a next generation (next generation, NG) interface. The gNB-CU or the donor-CU may alternatively exist in a form in which a user plane (User plane, UP for short) (CU-UP for short in this application) and a control plane (Control plane, CP) (CU-CP for short in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

A network management device in FIG. 1 may be an operation, administration and maintenance network element (operation, administration and maintenance, OAM). The network management device may include an element management system (element management system, EMS) and a network management system (network management system, NMS). As shown in FIG. 2, the network management device may be a functional network element located in a 5G core network (5G Core, 5GC). Alternatively, the network management device may be a functional network element deployed in a backbone network behind the 5G core network, or the network management device may be deployed at another location. A specific deployment location of the network management device is not limited in this application.

The IAB node is connected to the core network through the IAB donor. For example, in a 5G standalone (standalone, SA) architecture, an IAB node is connected to a core network (5G core, 5GC for short) of a 5G network through an IAB donor. In a dual connectivity (dual connectivity, DC)/multi-connectivity 5G architecture (for example, in a non-standalone (non-standalone, NSA) scenario or an NR-NR DC scenario), on a primary path, the IAB node may be connected to an evolved packet core (evolved packet core, EPC) through an evolved NodeB (evolved NodeB, eNB), or may be connected to a 5G core network through the IAB donor.

To ensure service transmission reliability, in an IAB network, multi-hop IAB node networking and multi-connectivity IAB node networking are supported. Therefore, there may be a plurality of transmission paths between a terminal and an IAB donor. On one path, there is a determined hierarchical relationship between IAB nodes, and between an IAB node and an IAB donor connected to the IAB node. Each IAB node considers, as a parent node, a node providing a backhaul service for the IAB node. Correspondingly, each IAB node may be considered as a child node of the parent node of the IAB node.

For example, refer to FIG. 1. A parent node of an IAB node 1 is an IAB donor, the IAB node 1 is a parent node of an IAB node 2 and an IAB node 3, both the IAB node 2 and the IAB node 3 are parent nodes of an IAB node 4, and a parent node of an IAB node 5 is the IAB node 2. An uplink data packet of the terminal may be transmitted to the IAB donor through one or more IAB nodes, and then is sent by the IAB donor to a mobile gateway device (for example, a user plane function (user plane function, UPF for short) network element in a 5G network). After the IAB donor receives a downlink data packet from the mobile gateway device, the IAB donor sends the downlink data packet to the terminal through the one or more IAB nodes. There are two available paths for data packet transmission between a terminal 1 and the IAB donor: the terminal 1→the IAB node 4→the IAB node 3→the IAB node 1→the IAB donor, and the terminal 1→the IAB node 4→the IAB node 2→the IAB node 1→the IAB donor. There are three available paths for data packet transmission between a terminal 2 and the IAB donor: the terminal 2-the IAB node 4→the IAB node 3→the IAB node 1→the IAB donor, the terminal 2→the IAB node 4→the IAB node 2→the IAB node 1→the IAB donor, the terminal 2-the IAB node 5→the IAB node 2→the IAB node 1→the IAB donor.

It may be understood that, in the IAB network, one transmission path between the terminal and the IAB donor may include one or more IAB nodes. Each IAB node needs to maintain a wireless backhaul link to a parent node, and further needs to maintain a radio link to a child node. If one IAB node is a node accessed by the terminal, a radio access link exists between the IAB node and a child node (namely, the terminal). If one IAB node is a node that provides a backhaul service for another IAB node, a wireless backhaul link exists between the IAB node and a child node (namely, the another IAB node). For example, refer to FIG. 1. On the path "the terminal 1→the IAB node 4→the IAB node 3→the IAB node 1→the IAB donor", the terminal 1 accesses the IAB node 4 through a radio access link, the IAB node 4 accesses the IAB node 3 through a wireless backhaul link, the IAB node 3 accesses the IAB node 1 through a wireless backhaul link, and the IAB node 1 accesses the IAB donor through a wireless backhaul link.

Each intermediate IAB node on an uplink path from the IAB node to the IAB donor may be referred to as an upstream node of the IAB node. For example, both the IAB node 1 and the IAB node 2 in FIG. 1 may be referred to as upstream IAB nodes of the IAB node 5. Each intermediate IAB node or an accessed IAB node on a downlink path from the IAB node to the terminal may be referred to as a downstream node (downstream node) of the IAB node. For example, the IAB node 2, the IAB node 3, the IAB node 4, and the IAB node 5 in FIG. 1 may all be referred to as downstream nodes (downstream nodes) of the IAB node 1, and the downstream node includes a child node, a child node of the child node (or referred to as a grandchild node), and the like. The downstream node may be another IAB node or a terminal. For example, the terminal 1 in FIG. 1 may be referred to as a downstream node of the IAB node 4, the IAB node 4 and the IAB node 5 may be referred to as downstream nodes of the IAB node 1, and the terminal 1 and the terminal 2 may be referred to as downstream nodes of the IAB node 1.

The foregoing IAB networking scenario is merely an example. In an IAB scenario with multi-hop and multi-connectivity combined, there are more other possible IAB networking scenarios. For example, an IAB donor and an IAB node connected to another IAB donor form dual connectivity to serve a terminal. The possible IAB networking scenarios are not listed one by one herein.

In embodiments of this application, the accessed IAB node is an IAB node accessed by the terminal, and the intermediate IAB node is an IAB node that provides a wireless backhaul service for an IAB node (for example, the accessed IAB node or another intermediate IAB node). For example, refer to FIG. 1. On the path "the terminal 1→the IAB node 4→the IAB node 3→the IAB node 1→the IAB donor", the IAB node 4 is an accessed IAB node, and the IAB node 3 and the IAB node 1 are intermediate IAB nodes. It should be noted that, an IAB node is an accessed IAB node for a terminal that accesses the IAB node, and an IAB node is an intermediate IAB node for a terminal that accesses another IAB node. Therefore, whether an IAB node is specifically an accessed IAB node or an intermediate IAB node is not fixed, and needs to be determined based on a specific application scenario.

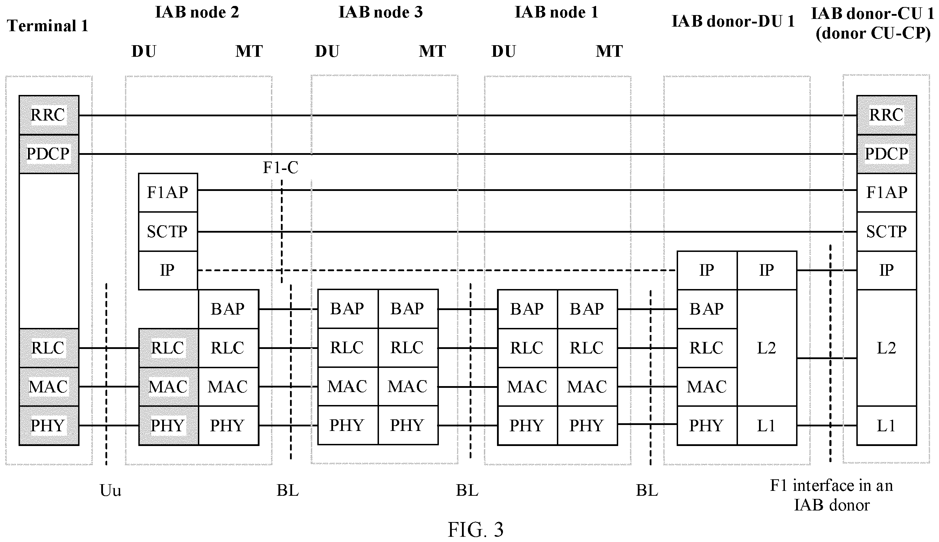

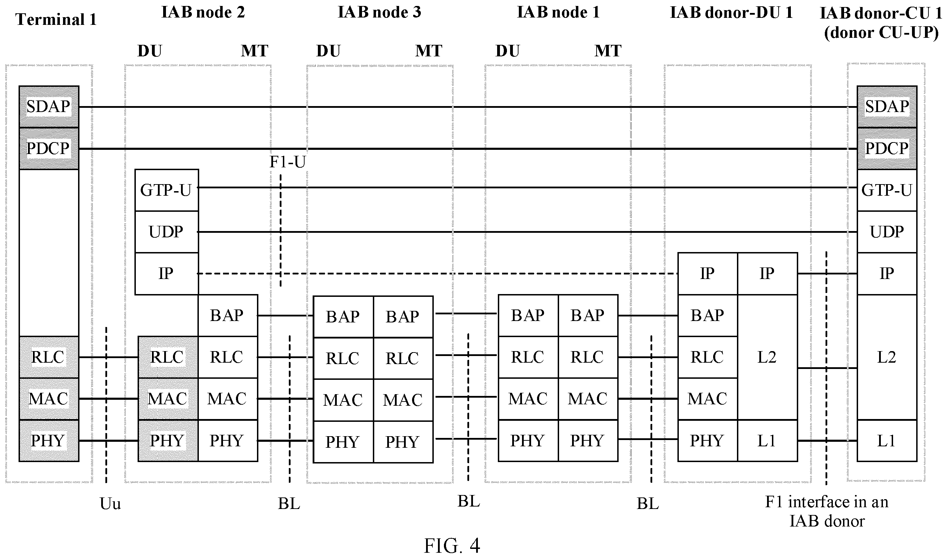

FIG. 3 and FIG. 4 are respectively a schematic diagram of a control plane protocol stack and a schematic diagram of a user plane protocol stack in an IAB network according to embodiments of this application. The following provides descriptions with reference to FIG. 3 and FIG. 4.

For a control plane, as shown in FIG. 3, a Uu interface is set up between the terminal 1 and an IAB2-DU, and peer protocol layers include an RLC layer, a MAC layer, and a PHY layer. An F1-C interface is set up between the IAB2-DU and an IAB donor-CU 1, and peer protocol layers include an F1 application protocol (F1 application protocol, F1AP) layer and a stream control transmission protocol (stream control transmission protocol, SCTP) layer. An IAB donor-DU 1 and the IAB donor-CU 1 are connected in a wired manner, and peer protocol layers include an internet protocol IP (internet protocol) layer, an L2, and an L1. BLs are set up between an IAB node 2 and an IAB node 3, between the IAB node 3 and an IAB node 1, and between the IAB node 1 and the IAB donor-DU 1, and peer protocol layers include a backhaul adaptation protocol (Backhaul Adaptation Protocol, BAP) layer, an RLC layer, a MAC layer, and a PHY layer. In addition, peer RRC layers and peer PDCP layers are set up between the terminal 1 and the IAB donor-CU 1, and peer IP layers are set up between the IAB2-DU and the IAB donor-DU 1.

It can be learned that, compared with a control plane protocol stack of a single air interface, in the control plane protocol stack in the IAB network, a DU of the accessed IAB node implements functions of a gNB-DU of the single air interface (namely, functions of setting up a peer RLC layer, a peer MAC layer, and a peer PHY layer with the terminal and setting up a peer F1AP layer and a peer SCTP layer with a CU). It may be understood that the DU of the accessed IAB node in the IAB network implements the functions of the gNB-DU of the single air interface, and the IAB donor-CU implements functions of a gNB-CU of the single air interface.

On the control plane, an RRC message is encapsulated in an F1AP message between the accessed IAB node and the IAB donor-CU for transmission. Specifically, in an uplink direction, the terminal 1 encapsulates the RRC message in a PDCP protocol data unit (protocol data unit, PDU), and sends the PDCP protocol data unit to the IAB2-DU after processing is sequentially performed at the RLC layer, the MAC layer, and the PHY layer. The IAB2-DU obtains the PDCP PDU after processing is sequentially performed at the PHY layer, the MAC layer, and the RLC layer, encapsulates the PDCP PDU in the F1AP message, and obtains an IP packet after processing is sequentially performed at the SCTP layer and the IP layer. An IAB2-MT sends the IP packet to an IAB3-DU after processing is separately performed at the BAP layer, the RLC layer, the MAC layer, and the PHY layer. The IAB3-DU obtains the IP packet after processing is sequentially performed at the PHY layer, the MAC layer, the RLC layer, and the BAP layer. Then, an IAB3-MT sends the IP packet to an IAB1-DU by using an operation similar to that of the IAB2-MT. Similarly, an IAB 1-MT sends the IP packet to the IAB donor-DU 1. After obtaining the IP packet through parsing, the IAB donor-DU 1 sends the IP packet to the IAB donor-CU 1. The IAB donor-CU 1 obtains the RRC message after processing is sequentially performed on the IP packet at the SCTP layer, the F1AP layer, and the PDCP layer. Operations in a downlink direction are similar. Details are not described herein again.

For a user plane, as shown in FIG. 4, a Uu interface is set up between the terminal 1 and an IAB2-DU, and peer protocol layers include an RLC layer, a MAC layer, and a PHY layer. An F1-U interface is set up between the IAB2-DU and an IAB donor-CU 1, and peer protocol layers include a GPRS tunneling protocol for the user plane (GPRS tunneling protocol for the user plane, GTP-U) layer and a user datagram protocol (user datagram protocol, UDP) layer. An IAB donor-DU 1 and the IAB donor-CU 1 are connected in a wired manner, and peer protocol layers include an IP layer, an L2, and an L1. BLs are set up between an IAB node 2 and an IAB node 3, between the IAB node 3 and an IAB node 1, and between the IAB node 1 and the IAB donor-DU 1, and peer protocol layers include a BAP layer, an RLC layer, a MAC layer, and a PHY layer. In addition, peer SDAP layers and peer PDCP layers are set up between the terminal 1 and the IAB donor-CU 1, and peer IP layers are set up between the IAB2-DU and the IAB donor-DU 1.

It can be learned that, compared with a user plane protocol stack of a single air interface, in the user plane protocol stack in the IAB network, a DU of the accessed IAB node implements a part of functions of a gNB - DU of the single air interface (namely, functions of setting up a peer RLC layer, a peer MAC layer, and a peer PHY layer with the terminal and setting up a peer GTP-U layer and a peer UDP layer with the IAB donor-CU 1). It may be understood that the DU of the accessed IAB node implements the functions of the gNB-DU of the single air interface, and the IAB donor-CU implements functions of a gNB-CU of the single air interface.

On the user plane, a PDCP data packet is encapsulated in a GTP-U tunnel between the accessed IAB node and the IAB donor-CU for transmission. The GTP-U tunnel is set up on the F1-U interface.

It should be noted that one IAB node may play one or more roles. The IAB node may have a protocol stack of the one or more roles. Alternatively, the IAB node may have a set of protocol stacks, and for different roles of the IAB node, protocol layers corresponding to different roles in the protocol stacks may be used to perform processing. The following uses an example in which the IAB node has a protocol stack of the one or more roles for description.

### (1) Protocol stack of a common terminal

When accessing the IAB network, the IAB node can function as a common terminal. In this case, an IAB node-MT has a protocol stack of the common terminal, for example, the protocol stack of the terminal 1 in FIG. 3 and FIG. 4: the RRC layer, the PDCP layer, the RLC layer, the MAC layer, and the PHY layer. On a control plane, an RRC message of the IAB node is encapsulated and transmitted in an F1AP message between a parent node of the IAB node and an IAB donor-CU. On a user plane, a PDCP data packet of the IAB node is encapsulated and transmitted in a GTP-U tunnel between a parent node of the IAB node and an IAB donor-CU.

In addition, after the IAB node accesses the IAB network, the IAB node may still play a role of the common terminal, for example, transmitting an uplink and/or downlink data packet (for example, an OAM data packet) of the IAB node with an IAB donor, and performing measurement through the RRC layer.

### (2) Protocol stack of an accessed IAB node

After the IAB node accesses the IAB network, the IAB node may provide an access service for a terminal, to play a role of the accessed IAB node. In this case, the IAB node has a protocol stack of the accessed IAB node, for example, the protocol stack of the IAB node 2 in FIG. 3 and FIG. 4.

In this case, there may be two sets of protocol stacks on an interface that is of the IAB node and that faces a parent node of the IAB node. One is a protocol stack of a common terminal, and the other is a protocol stack (namely, a protocol stack of the accessed IAB node) that provides a backhaul service for the terminal. Optionally, same protocol layers of the two sets of protocol stacks may be shared. For example, the two sets of protocol stacks correspond to a same RLC layer, a same MAC layer, a same PHY layer, or a same BAP layer.

### (3) Protocol stack of an intermediate IAB node

After the IAB node accesses the IAB network, the IAB node may function as an intermediate IAB node. In this case, the IAB node has a protocol stack of the intermediate IAB node, for example, a protocol stack of the IAB node 3 or the IAB node 1 in FIG. 3 and FIG. 4.

In this case, there may be two sets of protocol stacks on an interface that is of the IAB node and that faces a parent node of the IAB node. One is a protocol stack of a common terminal, and the other is a protocol stack (namely, a protocol stack of the intermediate IAB node) that provides a backhaul service for an IAB child node. Optionally, same protocol layers of the two sets of protocol stacks may be shared. For example, the two sets of protocol stacks correspond to a same RLC layer, a same MAC layer, a same PHY layer, or a same BAP layer.

In addition, the IAB node may play roles of an accessed IAB node and an intermediate IAB node at the same time. For example, the IAB node may be an accessed IAB node for some terminals and an intermediate IAB node for other terminals. In this case, the IAB node may have three sets of protocol stacks: One is the protocol stack of the common terminal, one is the protocol stack of the accessed IAB node, and one is the protocol stack of the intermediate IAB node. Optionally, same protocol layers of the three sets of protocol stacks may be shared. For example, the three sets of protocol stacks correspond to a same RLC layer, a same MAC layer, a same PHY layer, or a same BAP layer.

It should be noted that FIG. 3 and FIG. 4 are described by using the IAB network as an example. Content in FIG. 3 and FIG. 4 is also applicable to a relay network other than the IAB network. For a control plane protocol stack architecture of the relay network, refer to FIG. 3. For a user plane protocol stack architecture of the relay network, refer to FIG. 4. The IAB node in FIG. 3 and FIG. 4 may be replaced with a relay (relay). For example, the IAB node 2 may be replaced with a relay node 2, the IAB node 3 may be replaced with a relay node 3, the IAB node 1 may be replaced with a relay node 1, and the IAB donor 1 may be replaced with a donor node 1. The donor node has a CU-DU protocol stack. Other content is the same as the content described in FIG. 3 and FIG. 4. For details, refer to the descriptions in FIG. 3 and FIG. 4. Details are not described herein again.

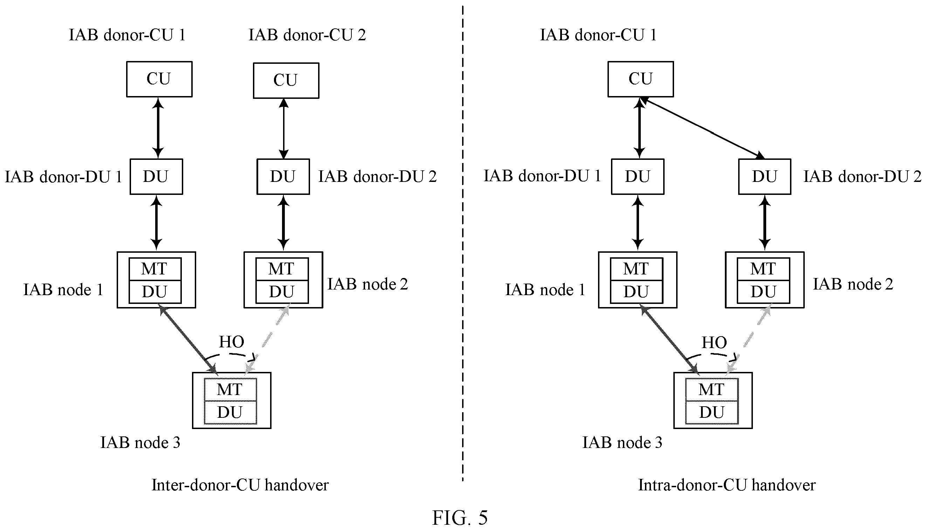

As shown in FIG. 5, an IAB node in an IAB network may be handed over. Handover of the IAB node from a source IAB donor to a target IAB donor may be referred to as inter-IAB donor handover or inter-donor-CU handover (inter-donor-CU migrating). Handover of the IAB node from a source IAB parent node to a target IAB parent node without changing an IAB donor may be referred to as intra-IAB donor handover or intra-donor-CU handover (intra-donor-CU migrating). The IAB handover scenario in this application may include inter-donor-CU migrating and/or intra-donor-CU migrating.

In this application, an IAB node-MT may be referred to as an IAB-MT for short, an IAB node-DU may be referred to as an IAB-DU for short, an IAB donor-CU may be referred to as a donor-CU for short, and an IAB donor-DU may be referred to as a donor-DU for short.

In this application, a cell served by the IAB node may include a cell served by the IAB node- DU or a cell deployed by the IAB node- DU. A cell accessed by the IAB node may include a cell accessed by the IAB node-MT or a serving cell in which the IAB node-MT is located.

In this application, the IAB donor connected to the IAB node may be referred to as an IAB donor of the IAB node for short. A cell served by the IAB donor of the IAB node may include a cell served by the IAB donor-DU or a cell deployed by the IAB donor- DU. The IAB node may directly access the IAB donor, or the IAB node may be connected to the IAB donor through another IAB node. In this application, a local end of the IAB node on an F1 interface may be a DU end of the IAB node, and a peer end of the IAB node on the F1 interface may be a CU end of the IAB donor of the IAB node.

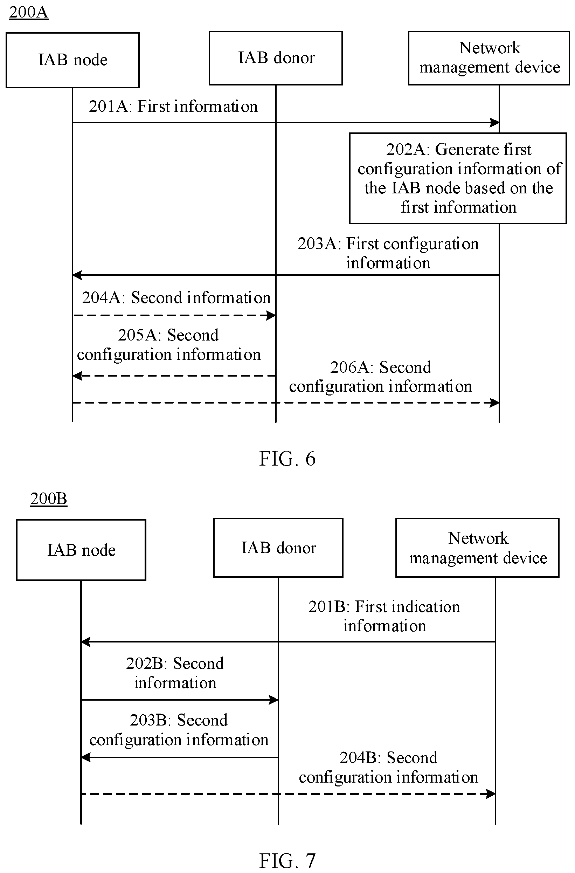

FIG. 6 shows a communication method according to an embodiment of this application. The communication method 200A includes the following steps.

Operation 201A: An IAB node sends first information to a network management device.

For example, before the IAB node sends the first information to the network management device, an IAB-MT may first initiate an attach (attach) procedure, and set up a protocol data unit session (protocol data unit session, PDU session) with a core network device (for example, a user plane function (user plane function, UPF)) through an IAB donor. The set-up PDU session may be considered as a data transmission channel, and the IAB node sends the first information to the network management device through the channel. Specifically, an IAB-DU may send the first information to the network management device through the data transmission channel that is set up by the IAB-MT. The first information may be carried in a configuration request message, and is used to request the network management device to generate a corresponding configuration for the IAB node (or the IAB-DU).

Optionally, before the IAB node sends the first information to the network management device, the IAB node may be just handed over from a source IAB donor to a target IAB donor, and set up a data transmission channel with the core network device through the target IAB donor. The IAB node sends the first information to the network management device through the data transmission channel. The first information may be carried in a configuration update request message, and is used to request the network management device to update a corresponding configuration for the IAB node (or the IAB-DU).

The first information may include at least one of the following information: cell information of a cell accessed by the IAB node, and a base station identifier (gNB ID) of the IAB donor of the IAB node. The cell information may include at least one of the following: a physical cell identifier, a cell identifier, and a cell global identifier (cell global identifier, CGI). The cell identifier includes a base station identifier and a cell local identifier. The cell global identifier includes a public land mobile network identifier (public land mobile network identifier, PLMNId), a base station identifier, and a cell local identifier (cell local identifier, cellLocalId).

Optionally, in a handover scenario, to be specific, the IAB node is handed over from the source IAB donor to the target IAB donor, the IAB node sends the first information to the network management device through the target IAB donor to request configuration update, where the first information may further include identification information of the IAB node, and specifically the identification information may be an IAB-DU identifier (IAB-DU ID) and/or an IAB-DU name (IAB-DU Name). For example, the network management device may find, based on the identification information of the IAB node, an original configuration of a cell served by the IAB-DU, and update the original configuration.

Operation 202A: The network management device generates first configuration information of the IAB node based on the first information.

After receiving the first information, the network management device learns of the IAB donor of the IAB node, and generates the first configuration information for the IAB node. Specifically, the network management device may generate the first configuration information for the IAB-DU.

The first configuration information includes at least one of the following parameters: a local IP address of the IAB node on an F1 interface, a peer IP address of the IAB node on the F1 interface, an identifier gNB ID of a base station to which the IAB node belongs, IAB-DU identification information (for example, a DU ID or a DU name), a gNB ID length, a cellLocalId, a PLMNIdList, an sNSSAIList, a PCI, a serving cell bandwidth, a TAC, an uplink/downlink frequency, an SSB frequency, an SSB period, an SSB carrier spacing, an SSB offset, SSB duration, and cell information of a cell served by the IAB node.

In this application, the cell information of the cell served by the IAB node may include at least one of the following: a PCI, a cell identifier (Cellidentity), and a CGI. The cell identifier includes a gNB Id and a cellLocalId. The cell global identifier CGI includes a PLMNId, a gNB Id and a cellLocalld.

In this application, an IP address type may include an IPv4 type and/or an IPv6 type. The peer IP address of the IAB node on the F1 interface includes at least one of the following: a CU end address corresponding to the F1 interface (for example, an IP address of a donor-CU, an IP address of a donor-CU-CP, or an IP address of a donor-CU-UP). For example, in a CP-UP separation architecture used by the donor-CU, a CU end address corresponding to an F1-C interface is the IP address of the donor-CU-CP, and a CU end address corresponding to an F1-U interface is the IP address of the donor-CU-UP.

In an IAB network, it is generally required that an IP address of the IAB node and an IP address of the IAB donor of the IAB node belong to a same network segment or have a same network prefix, to ensure normal data routing. In addition, generally, it is further required that a base station identifier included in the cell identifier of the cell served by the IAB node be the same as the base station identifier of the IAB donor of the IAB node.

In this embodiment of this application, to reduce signaling overheads, various pieces of configuration information may be indicated by defining an index value. For example, different configuration information sent by the network management device to the IAB node is in one-to-one correspondence with a configuration index. Therefore, through exchange of index values, a peer end can know a specific piece of configuration information that is delivered or reported. The correspondence may be shown in Table 1 below.

**Table 1**

| Configuration index | Configuration information |
|---|---|
| 0 | Parameters 1, 2, ... |
| 1 | Parameter 1', 2', ... |
| ... | ... |

For example, the network management device may determine the IAB donor of the IAB node based on the first information. For example, the network management device may determine the donor-CU and/or a donor-DU of the IAB node based on the first information.

For example, that the network management device determines the donor-CU of the IAB node based on the first information may be specifically as follows: Considering that the donor-CU corresponds to a unique base station identifier, one base station identifier also uniquely identifies one donor-CU. The network management device may determine the donor-CU of the IAB node based on the cell information, included in the first information, of the cell accessed by the IAB node. For example, when the cell information is the CellIdentity or the CGI, the network management device may determine the IAB donor (or the donor-CU) of the IAB node based on the base station identifier included in the cell identifier.

For example, that the network management device determines the donor-DU of the IAB node based on the first information may be specifically as follows: It is considered that after each IAB node accesses the network, the network management device configures, for the IAB node, the cell information of the cell served by the IAB node. In other words, because cell information of a cell served by each IAB node in the IAB network is configured by the network management device, the network management device may store a topology relationship of the IAB network. For example, the topology relationship may be a correspondence between the cell information of the cell served by each IAB node in the IAB network and cell information of a cell served by the donor-DU. Alternatively, the topology relationship may be a correspondence between the cell information of the cell served by the IAB node and the donor-DU. The network management device may determine the donor-DU of the IAB node based on the topology relationship and the first information.

For example, when a parent node of the IAB node is the IAB donor, because the cell information of the cell served by the donor-DU is configured by the network management device, the network management device stores a correspondence between the cell information of the cell served by the donor-DU and the donor-DU. Correspondingly, the network management device may determine the donor-DU of the IAB node based on the cell information, included in the first information, of the cell accessed by the IAB node (namely, the cell information of the cell served by the donor-DU) and the stored correspondence.

After the network management device determines the donor-CU and/or the donor-DU of the IAB node, the network management device may further generate the first configuration information for the IAB node based on the donor-CU and/or the donor-DU.

For example, after determining the donor-CU of the IAB node, the network management device may configure, for the IAB node, the cell identifier of the cell served by the IAB node, to ensure that the base station identifier included in the cell identifier of the cell served by the IAB node is the same as the base station identifier of the IAB donor of the IAB node. For another example, after the network management device determines the donor-DU of the IAB node, the network management device may allocate the local IP address on the F1 interface to the IAB node, so that the IP address of the IAB node and an IP address of the donor-DU belong to a same network segment or have a same network prefix.

Operation 203A: The network management device sends the first configuration information to the IAB node.

The first configuration information may be carried in a configuration response message, and is used to respond to the configuration request message sent by the IAB node.

For example, after receiving the first configuration information, the IAB node triggers to initiate an F1 interface setup (F1-Setup) procedure to the corresponding IAB donor, to set up an F1 interface between the IAB node and the corresponding IAB donor. Specifically, after receiving the first configuration information sent by the network management device, the IAB-DU triggers to initiate the F1 interface setup procedure to the donor-CU, to set up an F1 interface between the IAB-DU and the donor-CU.

Optionally, if the first configuration information does not include IP address information of the IAB node (for example, does not include the local IP address of the IAB node on the F1 interface, or the peer IP address of the IAB node on the F1 interface), this embodiment may further include the following operations 204A to 206A.

Optionally, the network management device may indicate the IAB node to request the corresponding IP address information from the IAB donor. For example, the network management device may send first indication information to the IAB node. The first indication information may be sent as separate information, or may be carried in the first configuration information for sending.

The first indication information may include at least one of the following information: an IP address type requested by the IAB node from the IAB donor (for example, an IPv4-type IP address requested from the IAB donor, and/or an IPv6-type IP address requested from the IAB donor), an IP address or an IP address prefix requested by the IAB node from the IAB donor, a quantity of IP addresses requested by the IAB node from the IAB donor, a quantity of IP addresses that are used for an F1-C interface or an F1-C service and that are requested by the IAB node from the IAB donor, a quantity of IP addresses that are used for an F1-U interface or an F1-U service and that are requested by the IAB node from the IAB donor, an IP address prefix that is used for an F1-C interface or an F1-C service and that is requested by the IAB node from the IAB donor, or an IP address prefix that is used for an F1-U interface or an F1-U service and that is requested by the IAB node from the IAB donor.

When the IAB node receives the first indication information, this embodiment may further include the following operations 204A to 206A.

Operation 204A: The IAB node sends second information to the IAB donor.

The second information is used to request the IAB donor of the IAB node to allocate the corresponding IP address information to the IAB node. Specifically, the IAB-MT sends an RRC message to the donor-CU, where the RRC message carries the second information, so that the donor-CU allocates the corresponding IP address information to the IAB node based on the second information. Alternatively, the donor-CU sends an F1AP message to the donor-DU, where the F1AP message carries the second information, so that the donor-DU allocates the corresponding IP address information to the IAB node based on the second information.

For example, for information included in the second information, refer to content of the first indication information. For example, the second information includes at least one of the following information: the IP address type requested by the IAB node from the IAB donor, the IP address or the IP address prefix requested by the IAB node from the IAB donor, the quantity of IP addresses requested by the IAB node from the IAB donor, the quantity of IP addresses that are used for the F1-C interface or the F1-C service and that are requested by the IAB node from the IAB donor, the quantity of IP addresses that are used for the F1-U interface or the F1-U service and that are requested by the IAB node from the IAB donor, the IP address prefix that is used for the F1-C interface or the F1-C service and that is requested by the IAB node from the IAB donor, or the IP address prefix that is used for the F1-U interface or the F1-U service and that is requested by the IAB node from the IAB donor.

Operation 205A: The IAB donor sends second configuration information to the IAB node.

After receiving the second information from the IAB node, the IAB donor may allocate the corresponding IP address information to the IAB node based on the second information, include the allocated IP address information in the second configuration information, and send the second configuration information to the IAB node.

Optionally, in a handover process, in a process in which the IAB node is handed over from the source IAB donor to the target IAB donor, the target IAB donor allocates a corresponding IP address or IP prefix to the IAB node, includes the allocated IP address or IP prefix in the second configuration information, and sends the second configuration information to the IAB node by using a handover command message generated by a target IAB node. Specifically, a target donor-CU generates the handover command message, where the message carries the second configuration information. The target donor-CU sends the generated handover command message to the IAB-MT through a source donor-CU, so that the IAB-MT sends the handover command message to the IAB-DU through an internal interface.

The second configuration information may include at least one of the following information: the IP address prefix allocated by the IAB donor to the IAB node, the IP address allocated by the IAB donor to the IAB node, the IP address that is used for the F1-C interface/F1-C service and that is allocated by the IAB donor to the IAB node, the IP address that is used for the F1-U interface/F1-U service and that is allocated by the IAB donor to the IAB node, the IP address prefix that is used for the F1-C interface/F1-C service that is allocated by the IAB donor to the IAB node, and the IP address prefix that is used for the F1-U interface/F1-U service and that is allocated by the IAB donor to the IAB node.

Operation 206A: The IAB node sends the second configuration information to the network management device.

After receiving the IP address information allocated by the IAB donor, the IAB node includes the IP address information allocated by the IAB donor in the second configuration information, and sends the second configuration information to the network management device. Specifically, the second configuration information may include at least one of the following information: the IP address prefix allocated by the IAB donor to the IAB node, the IP address allocated by the IAB donor to the IAB node, the IP address that is used for the F1-C interface/F1-C service and that is allocated by the IAB donor to the IAB node, the IP address that is used for the F1-U interface/F1-U service and that is allocated by the IAB donor to the IAB node, the IP address prefix that is used for the F1-C interface/F1-C service and that is allocated by the IAB donor to the IAB node, and the IP address prefix that is used for the F1-U interface/F1-U service and that is allocated by the IAB donor to the IAB node.

Optionally, in addition to the IP address or the IP prefix allocated by the IAB donor to the IAB node, the second configuration information may further include at least one of the following other information: the IAB-DU identification information (for example, the IAB-DU ID or the IAB-DU name) and the peer IP address of the IAB node on the F1 interface (namely, the IP address of the donor-CU). For example, the network management device may find, based on the identification information of the IAB node, the original configuration of the cell served by the IAB-DU, and update the original configuration.

Operation 206A is an optional operation. To be specific, after obtaining the IP address information, the IAB node may alternatively choose not to send the IP address information to the network management device.

Operation 206A may alternatively be replaced with: The IAB donor sends the second configuration information to the network management device. In other words, after allocating the corresponding IP address information to the IAB node, the IAB donor may alternatively send the second configuration information to the network management device. In this way, the IAB node does not need to send the second configuration information to the network management device.

Operations 204A and 205A in this embodiment of this application may separately constitute an embodiment. To be specific, once the IAB node determines that the received first configuration information does not include the IP address information of the IAB node, or after the IAB node receives the first indication information, the IAB node may perform steps 204A and 205A, to obtain the IP address information of the IAB node. Operation 206A is an optional operation. To be specific, after obtaining the IP address information, the IAB node may alternatively choose not to send the IP address information to the network management device.

This embodiment mainly resolves a problem of how the network management device learns of information about the IAB donor (including the donor-DU and/or the donor-CU) of the IAB node in a process in which the IAB node initially accesses the network or in an IAB node handover process, so that the network management device can accurately configure the IAB node in a timely manner. In this embodiment, the IAB node sends the cell information of the cell accessed by the IAB node to the network management device, so that the network management device learns of the IAB donor of the IAB node, to allocate the corresponding cell identifier and/or IP address information to the IAB node. Alternatively, the network management device may use an implicit (where the first configuration information does not include the IP address information of the IAB node) or explicit (where the first configuration information includes the first indication information) method, to indicate the IAB node to request the IAB donor to allocate the corresponding IP address information. In this embodiment, the IAB node can obtain the corresponding configuration information. This ensures normal running of the IAB node.

FIG. 7 shows a communication method according to an embodiment of this application. The communication method 200B includes the following steps.

Operation 201B: A network management device sends first indication information to an IAB node.

Optionally, the network management device may indicate the IAB node to request corresponding IP address information from an IAB donor. For example, the network management device may send the first indication information to the IAB node.

The first indication information may include at least one of the following information: an IP address type requested by the IAB node from the IAB donor (for example, an IPv4-type IP address requested from the IAB donor, and/or an IPv6-type IP address requested from the IAB donor), an IP address or an IP address prefix requested by the IAB node from the IAB donor, a quantity of IP addresses requested by the IAB node from the IAB donor, a quantity of IP addresses that are used for an F1-C interface or an F1-C service and that are requested by the IAB node from the IAB donor, a quantity of IP addresses that are used for an F1-U interface or an F1-U service and that are requested by the IAB node from the IAB donor, an IP address prefix that is used for an F1-C interface or an F1-C service and that is requested by the IAB node from the IAB donor, or an IP address prefix that is used for an F1-U interface or an F1-U service and that is requested by the IAB node from the IAB donor.

Operation 202B: The IAB node sends second information to the IAB donor.

The second information is used to request the IAB donor of the IAB node to allocate the corresponding IP address information to the IAB node. Specifically, an IAB-MT sends an RRC message to a donor-CU, where the RRC message carries the second information, so that the donor-CU allocates the corresponding IP address information to the IAB node based on the second information. Alternatively, a donor-CU sends an F1AP message to a donor-DU, where the F1AP message carries the second information, so that the donor-DU allocates the corresponding IP address information to the IAB node based on the second information.

For example, for information included in the second information, refer to content of the first indication information. For example, the second information includes at least one of the following information: the IP address type requested by the IAB node from the IAB donor, the IP address or the IP address prefix from the IAB donor requested by the IAB node, the quantity of IP addresses requested by the IAB node from the IAB donor, the quantity of IP addresses that are used for the F1-C interface or the F1-C service and that are requested by the IAB node from the IAB donor, the quantity of IP addresses that are used for the F1-U interface or the F1-U service and that are requested by the IAB node from the IAB donor, the IP address prefix that is used for the F1-C interface or the F1-C service and that is requested by the IAB node from the IAB donor, or the IP address prefix that is used for the F1-U interface or the F1-U service and that is requested by the IAB node from the IAB donor.

Operation 203B: The IAB donor sends second configuration information to the IAB node.

After receiving the second information from the IAB node, the IAB donor may allocate the corresponding IP address information to the IAB node based on the second information, include the allocated IP address information in the second configuration information, and send the second configuration information to the IAB node.

Optionally, in a handover process, in a process in which the IAB node is handed over from a source IAB donor to a target IAB donor, the target IAB donor allocates a corresponding IP address or IP prefix to the IAB node, includes the allocated IP address or IP prefix in the second configuration information, and sends the second configuration information to the IAB node by using a handover command message generated by a target IAB node. Specifically, a target donor-CU generates the handover command message, where the message carries the second configuration information. The target donor-CU sends the generated handover command message to the IAB-MT through a source donor-CU, so that the IAB-MT sends the handover command message to an IAB-DU through an internal interface.

The second configuration information may include at least one of the following information: the IP address prefix allocated by the IAB donor to the IAB node, the IP address allocated by the IAB donor to the IAB node, the IP address that is used for the F1-C interface/F1-C service and that is allocated by the IAB donor to the IAB node, the IP address that is used for the F1-U interface/F1-U service and that is allocated by the IAB donor to the IAB node, the IP address prefix that is used for the F1-C interface/F1-C service and that is allocated by the IAB donor to the IAB node, and the IP address prefix that is used for the F1-U interface/F1-U service and that is allocated by the IAB donor to the IAB node.

Operation 204B: The IAB node sends the second configuration information to the network management device.

After receiving the IP address information allocated by the IAB donor, the IAB node includes the IP address information allocated by the IAB donor in the second configuration information, and sends the second configuration information to the network management device. Specifically, the second configuration information may include at least one of the following information: the IP address prefix allocated by the IAB donor to the IAB node, the IP address allocated by the IAB donor to the IAB node, the IP address that is used for the F1-C interface/F1-C service and that is allocated by the IAB donor to the IAB node, the IP address that is used for the F1-U interface/F1-U service and that is allocated by the IAB donor to the IAB node, the IP address prefix that is used for the F1-C interface/F1-C service and that is allocated by the IAB donor to the IAB node, and the IP address prefix that is used for the F1-U interface/F1-U service and that is allocated by the IAB donor to the IAB node.

Optionally, in addition to the IP address or the IP prefix allocated by the IAB donor to the IAB node, the second configuration information may further include at least one of the following other information: IAB-DU identification information (for example, an IAB-DU ID or an IAB-DU name) and a peer IP address of the IAB node on an F1 interface (namely, an IP address of the donor-CU). For example, the network management device may find, based on identification information of the IAB node, an original configuration of a cell served by the IAB-DU, and update the original configuration.

Operation 204B is an optional operation. To be specific, after obtaining the IP address information, the IAB node may alternatively choose not to send the IP address information to the network management device.

Operation 204B may alternatively be replaced with: The IAB donor sends the second configuration information to the network management device. In other words, after allocating the corresponding IP address information to the IAB node, the IAB donor may alternatively send the second configuration information to the network management device. In this way, the IAB node does not need to send the second configuration information to the network management device.

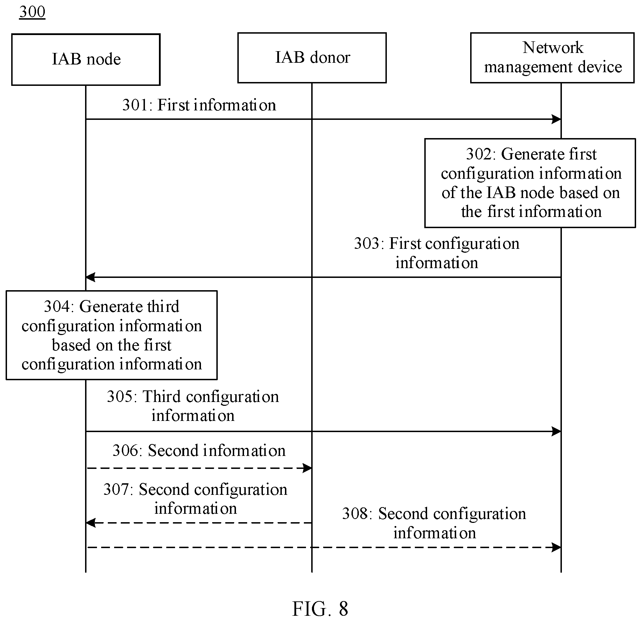

FIG. 8 shows a communication method according to an embodiment of this application. The communication method 300 includes the following steps.

Operation 301: An IAB node sends first information to a network management device.

The first information includes location information of the IAB node and/or neighboring cell information of the IAB node. The location information of the IAB node refers to geographic location information of the IAB node, for example, longitude and latitude information of the IAB node. The information about the neighboring cell of the IAB node refers to a cell identifier of the neighboring cell obtained by the IAB node through measurement, geographic location information of the neighboring cell, and/or the like.

Operation 302: The network management device generates first configuration information of the IAB node based on the first information.

The network management device may first determine a candidate IAB donor of the IAB node based on the first information. The candidate IAB donor may be at least one IAB donor nearby the IAB node.

For example, for each candidate IAB donor, the network management device generates a corresponding set of configuration information, as shown in Table 2.

**Table 2**

| | |
|---|---|
| Candidate IAB donor 1 | Configuration information 1 |
| Candidate IAB donor 2 | Configuration information 2 |
| ... | ... |
| Candidate IAB donor X | Configuration information X |

The network management device may include configuration information corresponding to X (where X is a positive integer) candidate IAB donors in the first configuration information, to generate the first configuration information of the IAB node. Configuration information corresponding each candidate IAB donor for the IAB node may include at least one of the following parameters: a local IP address of the IAB node on an F1 interface, a peer IP address of the IAB node on the F1 interface (namely, an IP address of a donor-CU), a base station identifier of the candidate IAB donor, DU identification information (such as a DU ID or a DU name) of the IAB node, a gNB ID length, a cellLocalId, a PLMNIdList, an sNSSAIList, a PCI, a CGI, a serving cell bandwidth, a TAC, an uplink/downlink frequency, an SSB frequency, an SSB period, an SSB carrier spacing, an SSB offset, SSB duration, an IP address of a security gateway, and cell information of a cell served by the IAB node.

Operation 303: The network management device sends the first configuration information to the IAB node.

Operation 304: The IAB node determines third configuration information based on the first configuration information.

The IAB node may select one of candidate IAB donors for access based on factors such as access link quality. The IAB donor selected by the IAB node may be referred to as a target IAB donor. For example, in a scenario in which the IAB node initially accesses a network, the IAB node may use an IAB donor that the IAB node prepares to access or selects as the target IAB donor. Alternatively, in a scenario in which the IAB node performs handover, the IAB node may use a target IAB donor to which the handover is performed as the target IAB donor.

The IAB node determines, in the first configuration information based on the selected target IAB donor, configuration information corresponding to the target IAB donor, and uses the configuration information as the third configuration information.

For example, the IAB node (or an IAB-MT of the IAB node) receives system information or broadcast information from a parent node (for example, the target IAB donor or an IAB node connected to the target IAB donor), determines, in the first configuration information based on the received system information or broadcast information, the configuration information corresponding to the target IAB donor, and uses the configuration information as the third configuration information. For example, the IAB node may obtain, from the system information or the broadcast information, a CGI of a cell served by the parent node, to determine, in the first configuration information based on the CGI, the configuration information corresponding to the target IAB donor, and use the configuration information as the third configuration information.

Optionally, in a scenario in which the IAB node performs handover, a source IAB donor may send fifth indication information to the IAB node. The fifth indication information includes at least one of the following: a base station identifier of the target IAB donor, an IP address of a target IAB donor-CU, information used to indicate inter-donor-CU handover, and information used to indicate a change of the IAB donor. The fifth indication information may be carried in an RRC message (for example, an RRC reconfiguration message) generated by the source IAB donor, or carried in an F1AP message generated by the source IAB donor.

When the fifth indication information includes the base station identifier of the target IAB donor, the IAB node may determine, in the first configuration information based on the base station identifier of the target IAB donor, the configuration information corresponding to the target IAB donor, and use the configuration information as the third configuration information.

When the fifth indication information includes the IP address of the target IAB donor-CU, after determining the third configuration information, the IAB node triggers to initiate an F1 interface setup procedure to the target IAB donor-CU indicated by the IP address. The F1 interface setup procedure may include reporting the determined third configuration information to the target IAB donor- CU. Optionally, the IAB node may determine, in the first configuration information based on the IP address, the configuration information corresponding to the target IAB donor, and use the configuration information as the third configuration information.

When the fifth indication information includes the information used to indicate inter-donor-CU handover or the information used to indicate a change of the IAB donor (or the donor-CU), the IAB node may learn that the IAB donor (or the donor-CU) connected to the IAB node is changed. Therefore, the IAB node needs to determine, in the first configuration information, the configuration information corresponding to the target IAB donor, and use the configuration information as the third configuration information. In other words, the fifth indication information may be used to trigger the IAB node to determine, in the first configuration information, the configuration information corresponding to the target IAB donor, and use the configuration information as the third configuration information.

For example, after determining the third configuration information, the IAB node may initiate the F1 interface setup (F1-Setup) procedure to the corresponding target IAB donor, to set up the F1 interface between the IAB node and the corresponding target IAB donor. Specifically, after determining the third configuration information, an IAB-DU triggers to initiate the F1 interface setup procedure to a target donor-CU, to set up the F1 interface between the IAB-DU and the target donor-CU. It may also be considered that the fifth indication information triggers the IAB node to initiate the F1 interface setup (F1-Setup) procedure to the corresponding target IAB donor, to set up the F1 interface between the IAB node and the corresponding target IAB donor.

Optionally, after determining the third configuration information, the IAB node may set up an IP security association with the security gateway based on the IP address of the security gateway. The security gateway is a security gateway on a path between the IAB node and the target IAB donor.

The fifth indication information may be a source IAB.

It should be noted that operations 303 and 304 may constitute a separate embodiment, used for the IAB node to obtain a plurality of configurations from the network management device and select a correct configuration from the plurality of configurations. In other words, the network management device does not necessarily generate the first configuration information based on operation 301.

If the first configuration information does not include the IP address of the security gateway, the IAB node may send request information to the target IAB donor to request the IP address of the security gateway.

Operation 305: The IAB node sends the third configuration information to the network management device.

In an implementation, to reduce signaling overheads, if the configuration information corresponding to each candidate IAB donor in the first configuration information corresponds to one index value, the IAB node in operation 305 may send an index value corresponding to the third configuration information to the network management device.

Operation 305 is an optional operation. To be specific, the network management device may not need the third configuration information, or the network management device may obtain the third configuration information in another manner.

Optionally, if the first configuration information does not include IP address information of the IAB node (for example, does not include the local IP address of the IAB node on the F1 interface), this embodiment may further include the following operations 306 to 308.

Optionally, the network management device may indicate the IAB node to request the corresponding IP address information from the IAB donor. For example, the network management device may send first indication information to the IAB node. The first indication information may be sent as separate information, or may be carried in the first configuration information for sending. When the IAB node receives the first indication information, this embodiment may further include the following operations 306 to 308.

The first indication information may include at least one of the following information: an IP address type requested by the IAB node from the IAB donor, an IP address or an IP address prefix requested by the IAB node from the IAB donor, a quantity of IP addresses requested by the IAB node from the IAB donor, a quantity of IP addresses that are used for an F1-C interface or an F1-C service and that are requested by the IAB node from the IAB donor, a quantity of IP addresses that are used for an F1-U interface or an F1-U service and that are requested by the IAB node from the IAB donor, an IP address prefix that is used for an F1-C interface or an F1-C service and that is requested by the IAB node from the IAB donor, or an IP address prefix that is used for an F1-U interface or an F1-U service and that is requested by the IAB node from the IAB donor.

Operation 306: The IAB node sends second information to the IAB donor.

For this operation, refer to operation 204A, and an optional operation of operation 204A may be included. Details are not described herein again.

Operation 307: The IAB donor sends second configuration information of the IAB node to the IAB node.

For this operation, refer to operation 205A, and an optional operation of operation 205A may be included. Details are not described herein again.

Operation 308: The IAB node sends the second configuration information to the network management device.

For this operation, refer to operation 206A, and an optional operation of operation 206A may be included. Details are not described herein again.

Operation 308 is an optional operation. To be specific, after obtaining the IP address information, the IAB node may alternatively choose not to send the IP address information to the network management device.

Operation 308 may be combined with operation 305. To be specific, the second configuration information and the third configuration information may be sent to the network management device together in operation 308. Operation 305 may be omitted as an optional operation.

Operation 308 may alternatively be replaced with: The IAB donor sends the second configuration information to the network management device. In other words, after allocating the corresponding IP address information to the IAB node, the IAB donor may alternatively send the second configuration information to the network management device. In this way, the IAB node does not need to send the second configuration information to the network management device.

The IAB node in this embodiment of this application may be a handover IAB node (for example, the IAB node 3 in FIG. 5), or may be a downstream node of the handover IAB (for example, a child node of the IAB node 3 in FIG. 5).

In this embodiment, the IAB node sends the location information of the IAB and/or neighboring cell information to the network management device, so that the network management device knows a candidate IAB donor that can be accessed/allowed to be accessed nearby the IAB node, to configure configuration information corresponding to each candidate IAB donor for the IAB node, and send the configuration information to the IAB node.

The IAB node may determine the corresponding configuration information in the first configuration information based on the target IAB donor of the IAB node. The network management device may use an implicit (where the first configuration information does not include the IP address information of the IAB node) or explicit (where the first configuration information includes the first indication information) method, to indicate the IAB node to request the IAB donor to allocate the corresponding IP address information.

In this embodiment, the IAB node can select one set of pieces of configuration information from a plurality of sets of pieces of configuration information sent by the network management device, and further the IAB node and the network management device can align the configuration information selected by the IAB node. This ensures normal running of the IAB node.

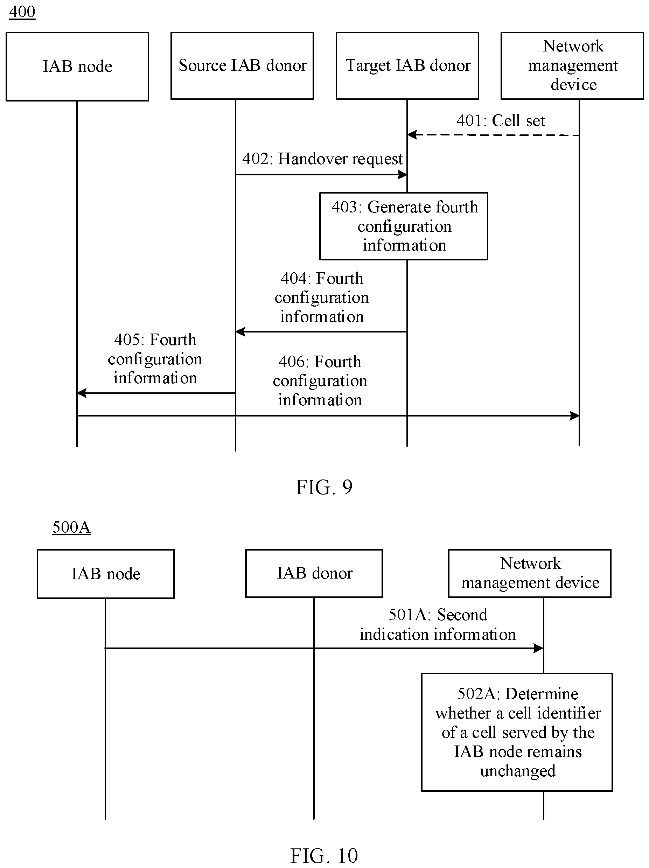

FIG. 9 shows a communication method according to an embodiment of this application. The communication method 400 includes the following steps.

Operation 401: A network management device sends a cell set to a target IAB donor.

The network management device may send a cell set to each IAB donor node in advance.

The cell set may include cell information of one or more cells, for example, may be one of or a plurality of combinations of a PCI, a CGI, or a CellIdentity.

Operation 401 is an optional operation. For example, if a cell set is pre-stored in the target IAB donor, or the cell set is protocol-predefined, the target IAB donor may obtain the cell set without interaction between the network management device and the IAB donor. For another example, the target IAB donor may automatically generate fourth configuration information of an IAB node based on configuration information of the IAB node in S402. For still another example, the target IAB donor may obtain information from another device to generate the fourth configuration information of the IAB node, which is not necessarily obtained from the network management device.

Operation 402: A source IAB donor sends a handover request message to the target IAB donor.

The handover request message includes the configuration information of the IAB node. The configuration information may include at least one of the following parameters: a local IP address of the IAB node on an F1 interface, a gNB ID, DU identification information (for example, a DU ID or a DU name) of the IAB node, a gNB ID length, a cellLocalId, a PLMNIdList, an sNSSAIList, a PCI, a CGI, a serving cell bandwidth, a TAC, an uplink/downlink frequency, an SSB frequency, an SSB period, an SSB carrier spacing, an SSB offset, SSB duration, and cell information of a cell served by the IAB node.

Optionally, the configuration information may further include an indication indicating whether the cell is activated. The indication information is in one-to-one correspondence with the cell information of the cell served by the IAB node, and is used to indicate whether the cell served by the IAB node is currently activated. The configuration information may be included in the handover request message and sent as context information of the IAB node.

The source IAB donor may send the handover request message to the target IAB donor after receiving a measurement report of the IAB node.

Operation 403: The target IAB donor generates the fourth configuration information of the IAB node based on the configuration information of the IAB node.

The fourth configuration information may also be referred to as configuration information of the IAB node under the target IAB donor. The fourth configuration information may include at least one of the following parameters: the cell information of the cell served by the IAB node, the local IP address of the IAB node on the F1 interface, a peer IP address of the IAB node on the F1 interface, IAB-DU identification information (for example, an IAB-DU ID or an IAB-DU name), SSB information of the cell served by the IAB node, system information of the cell served by the IAB node, the indication information indicating whether the cell served by the IAB node is activated, and an IP address of a security gateway, where the F1 interface further includes an F1-C interface and/or an F1-U interface.

For example, after receiving the configuration information of the IAB node sent by the source IAB donor, the target IAB donor selects new configuration information for the IAB node from a locally stored cell set, for example, allocates a cell identifier of the cell served by the IAB node, and/or allocates IP address information of the IAB node, and includes the selected new configuration information in the fourth configuration information.

Operation 404: The target IAB donor sends the fourth configuration information to the source IAB donor.

The fourth configuration information may be carried in a handover request response message sent by the target IAB donor to the source IAB donor. The fourth configuration information may exist in the handover request response message in a form of a container.

The fourth configuration information may be carried in an RRC message (for example, a handover command message, which may also be referred to as an RRC reconfiguration message) generated by a target IAB donor-CU.

Optionally, the fourth configuration information may be carried in an F1AP message generated by the target IAB donor-CU.

Operation 405: The source IAB donor sends the fourth configuration information to the IAB node.

After obtaining the fourth configuration information, the source IAB donor may further transparently transmit the fourth configuration information to the IAB node without parsing. The fourth configuration information may be carried in a handover command or a reconfiguration message sent by the source IAB donor to the IAB node. Specifically, a source donor-CU may send the fourth configuration information to an IAB-DU by using the F1AP message, or the source donor-CU sends the fourth configuration information to an IAB-MT by using the RRC message, and then the IAB-MT sends the fourth configuration information to the IAB-DU through an internal interface.

For example, after obtaining the RRC message in operation 404 from the target IAB donor-CU, a source IAB donor-CU forwards the RRC message to an IAB node-MT, and then the IAB node-MT forwards the RRC message to an IAB node-DU through the internal interface.

For example, after obtaining the F1AP message in operation 404 from the target IAB donor-CU, a source IAB donor-CU further encapsulates the F1AP message in the RRC message generated by the source IAB donor-CU and sends the RRC message to an IAB node-MT, and the IAB node-MT forwards the RRC message to an IAB node-DU through the internal interface. Alternatively, after obtaining the F1AP message from the target IAB donor-CU, a source IAB donor-CU further encapsulates the F1AP message into the F1AP message generated by the source IAB donor-CU and sends the F1AP message to an IAB node-DU.

Optionally, after receiving the fourth configuration information, the IAB node triggers to initiate an F1 interface setup (F1-Setup) procedure to the target IAB donor, to set up the F1 interface between the IAB node and the target IAB donor. Specifically, after receiving the fourth configuration information, the IAB -DU triggers to initiate the F1 interface setup procedure to the target donor-CU, to set up the F1 interface between the IAB-DU and the target donor-CU.

Optionally, after receiving the fourth configuration information, the IAB node may set up an IP security association with the security gateway based on the IP address of the security gateway in the fourth configuration information. The security gateway is a security gateway on a path between the IAB node and the target IAB donor.

Operations 402 to 405 may constitute a separate embodiment, used for the IAB node to obtain the fourth configuration information from the target IAB donor.

Operation 406: The IAB node sends the fourth configuration information to the network management device.

Operation 406 and an operation in which the IAB node sets up the F1 interface with the target IAB donor are in no particular order in time.

Operation 406 is an optional operation. To be specific, after obtaining the fourth configuration information, the IAB node may alternatively choose not to send the fourth configuration information to the network management device.

Operation 406 may alternatively be replaced with: The target IAB donor or the source IAB donor sends the fourth configuration information to the network management device. In other words, after obtaining the fourth configuration information, the target IAB donor or the source IAB donor may alternatively send the fourth configuration information to the network management device. In this way, the IAB node does not need to send the fourth configuration information to the network management device.

The IAB node in this embodiment of this application may be a handover IAB node (for example, the IAB node 3 in FIG. 5), or may be a downstream node of the handover IAB (for example, a child node of the IAB node 3 in FIG. 5).

In this embodiment, the IAB node can complete configuration update of a corresponding IAB node in a handover process, to improve communication efficiency.

FIG. 10 shows a communication method according to an embodiment of this application. The communication method 500A includes the following steps.

Operation 501A: An IAB node sends second indication information to a network management device.

The second indication information includes location information of the IAB node and/or neighboring cell information of the IAB node. Optionally, the second indication information may alternatively be indication information used to indicate that a PCI of a cell served by the IAB node remains unchanged.

For example, the IAB node may send the second indication information to the network management device after being handed over to a target IAB donor.

For example, the second indication information may be included in any message sent by the IAB node to the network management device in all the foregoing embodiments, for example, a configuration update request message, or another newly defined message. This is not limited in this embodiment of this application.

Operation 502A: The network management device determines whether a cell identifier of the IAB node remains unchanged.

The network management device may learn of a current location of the IAB node based on the second indication information, and determine whether a physical cell identifier PCI of the served cell of the IAB node remains unchanged or needs to be changed.

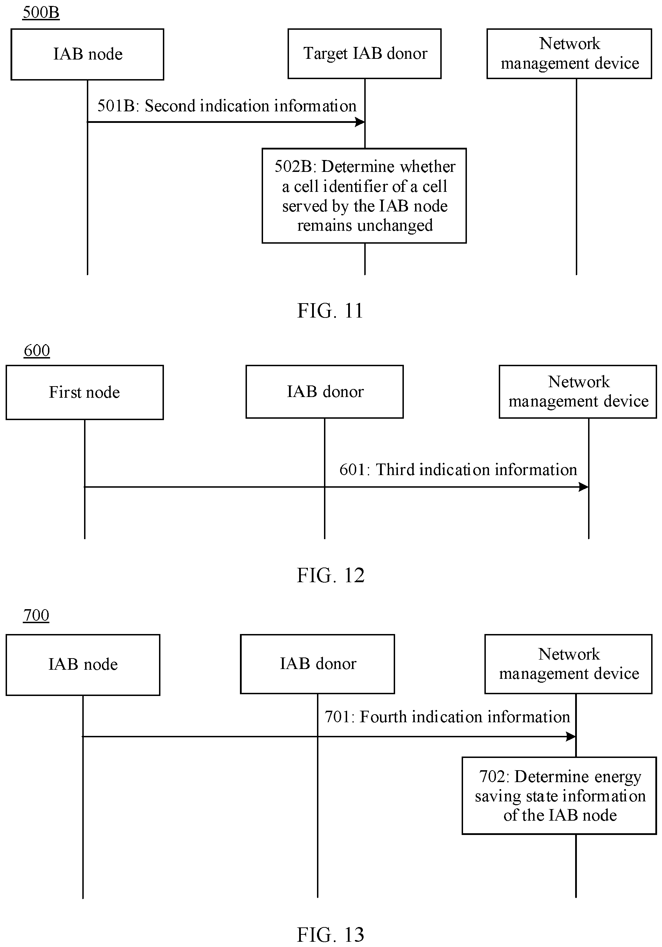

FIG. 11 shows a communication method according to an embodiment of this application. The communication method 500B includes the following steps.

Operation 501B: An IAB node sends second indication information to an IAB donor of the IAB node.

The IAB node may send the second indication information to a target IAB donor in a process of being handed over to the target IAB donor. The IAB node may directly send the second indication information to the target IAB donor, or a source IAB donor may send the second indication information to the target IAB donor.

The second indication information includes location information of the IAB node and/or neighboring cell information of the IAB node. Optionally, the second indication information may be indication information used to indicate that a PCI of a cell served by the IAB node remains unchanged.

For example, the second indication information may be included in any message sent by the IAB node to the target IAB donor in all the foregoing embodiments, for example, a configuration update request message or another newly defined message, or the second indication information may be included in a handover request message sent by the source IAB donor to the target IAB donor in the foregoing embodiments. This is not limited in this embodiment of this application.

Operation 502B: The IAB donor determines whether a cell identifier of the IAB node remains unchanged.

The IAB donor may learn of a current location of the IAB node based on the second indication information, and determine whether a physical cell identifier of the served cell of the IAB node remains unchanged or needs to be changed.

In this embodiment, this can avoid updating the PCI in an IAB node handover process, reduce impact on communication between the IAB node and a child node of the IAB node, improve communication efficiency, and improves user experience

FIG. 12 shows a communication method according to an embodiment of this application. The communication method 600 includes the following steps.

Operation 601: A first node sends third indication information to a network management device.

The third indication information is used to indicate whether the first node is an IAB node or an IAB-DU, or an IAB donor or a donor-DU. Alternatively, the third indication information is used to indicate whether the first node is an IAB node or an IAB-DU. Alternatively, the third indication information is used to indicate whether the first node is an IAB donor or a donor-DU. The network management device may identify the IAB node/the IAB-DU and/or the IAB donor or the donor-DU based on the received third indication information, and separately generate configuration information for the IAB-DU and/or the donor-DU.

Specifically, the third indication information may be an explicit indication or an implicit indication. The implicit indication means that the third indication information may be an identifier of the IAB node or the IAB donor, for example, an IAB-DU ID/name or a donor-DU ID/name. Alternatively, the third indication information may be any information that can identify an identity of the IAB node or the IAB donor, for example, an identity of the IAB-DU/the donor-DU.

For example, the third indication information may be included in any message sent by the IAB node to the network management device in all the foregoing embodiments, for example, in a configuration update request message, a configuration request message, or another newly defined message. This is not limited in this embodiment.

This embodiment mainly resolves a problem of how the network management device learns whether the IAB node is an IAB donor, so that the network management device can learn of a status of the IAB node in a timely manner, and control the IAB node.

FIG. 13 shows a communication method according to an embodiment of this application. The communication method 700 includes the following steps.

Operation 701: An IAB node sends fourth indication information to a network management device.

The fourth indication information is used to indicate energy saving state information of the IAB node.

Specifically, the IAB node includes an IAB-DU and an IAB-MT. Energy saving of the IAB node may be implemented in the following manner: The IAB-MT enters an inactive state, and the IAB-DU closes a cell served by the IAB-DU or a cell served by the IAB-DU enters a discontinuous transmission state, for example, a DTX state (discontinuous transmission). That the cell served by the IAB-DU enters the DTX state means that the served cell sends only common information such as a system broadcast, a paging (Paging) message, and a long-period SSB, and does not perform data transmission.

Once the IAB-DU enters an energy saving state, the IAB node needs to notify the network management device in a timely manner. For example, once the IAB-DU closes the served cell or the served cell of the IAB-DU enters the DTX state, the IAB node needs to notify the network management device in a timely manner. In other words, the fourth indication information is used to indicate that the cell served by the IAB-DU is powered off, and/or is used to indicate that the cell served by the IAB-DU enters the DTX state.

Optionally, when the served cell of the IAB-DU enters the DTX state, the fourth indication information may further include SSB information used by the IAB-DU in the DTX state, for example, an SSB period.

For example, the fourth indication information may be included in any message sent by the IAB node to the network management device in all the foregoing embodiments, for example, a configuration update request message, or another newly defined message. This is not limited in this embodiment.

Operation 702: The network management device determines the energy saving state information of the IAB node based on the fourth indication information.

This embodiment mainly resolves a problem of how the network management device learns of a cell status of the IAB node in the energy saving state, so that the network management device can learn of the status of the IAB node in a timely manner, and control the IAB node.

Based on a technical concept similar to the foregoing technical concept, an embodiment of this application provides a communication device. The communication device may be the relay device, the network device, or the user equipment in the communication method and any possible design of the communication method provided in any one of the foregoing embodiments. The relay device, the network device, or the user equipment may include at least one corresponding unit configured to perform a method step, an operation, or behavior performed by the relay device, the network device, or the user equipment in the communication method provided in any one of the foregoing embodiments. The at least one unit may be disposed in one-to-one correspondence with the method step, the operation, or the behavior performed by the relay device, the network device, or the user equipment.

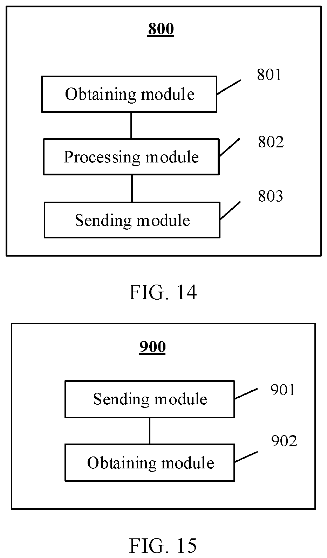

FIG. 14 is a schematic block diagram of a communication apparatus 800 according to an embodiment of this application. The following specifically describes a structure and a function of the communication apparatus 800 with reference to FIG. 14. The communication apparatus 800 may include: an obtaining module 800, configured to receive first information from an integrated access and backhaul IAB node; a processing module 802, configured to generate first configuration information of the IAB node based on the first information; and a sending module 803, configured to send the first configuration information to the IAB node.

Optionally, the first information includes: cell information of a cell accessed by the IAB node, and/or a base station identifier of an IAB donor of the IAB node.

Optionally, the cell information includes at least one of the following: a cell identifier, a cell global identifier, and a physical cell identifier.

Optionally, the first information includes location information or neighboring cell information of the IAB node.

Optionally, the first configuration information includes X pieces of configuration information, the X pieces of configuration information respectively correspond to X candidate IAB donors, and X is a positive integer. The method further includes: The network management device receives third configuration information or an index corresponding to the third configuration information from the IAB node, where the third configuration information is determined by the IAB node based on the first configuration information, and there is a correspondence between the third configuration information and an IAB donor selected by the IAB node.

Optionally, the first configuration information includes at least one of the following: a local internet protocol IP address of the IAB node on an F 1 interface, a peer IP address of the IAB node on the F1 interface, and cell information of a cell served by the IAB node, where a local end of the F1 interface is a distributed unit DU end of the IAB node, and a peer end of the F1 interface is a central unit CU end of the IAB donor of the IAB node.

Optionally, that the processing module 802 generates first configuration information of the IAB node based on the first information includes: The processing module 802 determines the IAB donor of the IAB node based on the first information; and the processing module 802 generates the first configuration information based on the IAB donor.

Optionally, that the processing module 802 generates the first configuration information based on the IAB donor includes: The processing module 802 determines the local IP address of the IAB node on the F1 interface based on an IAB donor-DU; and/or the processing module 802 determines, based on an IAB donor-CU, the cell information of the cell served by the IAB node.

Optionally, when the first configuration information does not include the local IP address of the IAB node on the F1 interface, the following operation is included: The sending module 803 further sends first indication information to the IAB node, where the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1 -C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, where X, Y, Z, M, and N are positive integers, the F1-C interface is a control plane interface of the F1 interface, and the F1-U interface is a user plane interface of the F1 interface.

Optionally, the sending module 803 sends a preconfigured cell set to a target IAB donor of the IAB node; and the obtaining module 801 receives cell information from the IAB node, where the cell information is determined by the target IAB donor of the IAB node for the IAB node in the preconfigured cell set.

Optionally, the obtaining module 801 receives second indication information from the IAB node; and the processing module 802 determines, based on the second indication information, that a physical cell identifier PCI of the IAB node remains unchanged.

Optionally, the obtaining module 801 receives third indication information from the IAB node; and the processing module 802 determines, based on the third indication information, that the first node is the IAB node or the IAB donor.

Optionally, the obtaining module 801 receives fourth indication information from the IAB node, where the fourth indication information includes a status of the cell served by the IAB node, and the status of the cell served by the IAB node includes: the cell is powered off or the cell is in a discontinuous reception DTX state; and the processing module 802 determines, based on the fourth indication information, the status of the cell served by the IAB node.

Optionally, when the status of the cell served by the IAB node is that the cell is in the DTX state, the fourth indication information further includes SSB information of the cell served by the IAB node.

FIG. 15 is a schematic block diagram of a communication apparatus 900 according to an embodiment of this application. The following specifically describes a structure and a function of the communication apparatus 900 with reference to FIG. 15. The communication apparatus 900 may include: a sending module 901, configured to send first information to a network management device; and an obtaining module 902, configured to receive first configuration information from the network management device.

Optionally, the first information includes: cell information of a cell accessed by the IAB node, and/or a base station identifier of an IAB donor of the IAB node.

Optionally, the cell information includes at least one of the following: a cell identifier, a cell global identifier, and a physical cell identifier.

Optionally, the first information includes location information or neighboring cell information of the IAB node.

Optionally, the first configuration information includes X pieces of configuration information, the X pieces of configuration information respectively correspond to X candidate IAB donors, and X is a positive integer. The method further includes: The IAB node selects an IAB donor; the IAB node determines configuration information that is in the first configuration information and that corresponds to the IAB donor as third configuration information; and the IAB node sends the third configuration information or an index corresponding to the third configuration information to the network management device.

Optionally, the first configuration information includes at least one of the following: a local IP address of the IAB node on an F1 interface, a peer IP address of the IAB node on the F1 interface, and cell information of a cell served by the IAB node, where a local end of the F1 interface is a distributed unit DU end of the IAB node, and a peer end of the F1 interface is a central unit CU end of the IAB donor of the IAB node.

Optionally, when the first configuration information does not include the local IP address of the IAB node on the F1 interface, the following operation is included: The obtaining module 902 further receives first indication information from the network management device, where the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, where X, Y, Z, M, and N are positive integers, the F1-C interface is a control plane interface of the F1 interface, and the F1-U interface is a user plane interface of the F1 interface.

Optionally, the sending module 901 is configured to send second information to the IAB donor, where the second information is used to request the IP address type from the IAB donor; or the second information is used to request the IP address prefix from the IAB donor; or the second information is used to request the X IP addresses from the IAB donor; or the second information is used to request, from the IAB donor, the Y IP addresses used for the F1-C interface or the F1-C service; or the second information is used to request, from the IAB donor, the Z IP addresses used for the F1-U interface or the F1-U service; or the second information is used to request, from the IAB donor, the IP address prefix used for the F1-C interface or the F1-C service; or the second information is used to request, from the IAB donor, the IP address prefix used for the F1-U interface or the F1-U service, where X, Y, Z, M, and N are positive integers, the F1-C interface is the control plane interface of the F1 interface, and the F1-U interface is the user plane interface of the F1 interface. The obtaining module 902 is configured to receive second configuration information from the IAB donor, where the second configuration information includes at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

Optionally, the sending module 901 is further configured to send the second configuration information to the network management device.

Optionally, the sending module 901 is further configured to send second indication information to the network management device, where the second indication information includes the location information of the IAB node and/or the neighboring cell information of the IAB node; or the second indication information is used to indicate that a PCI of the cell served by the IAB node remains unchanged.

Optionally, the sending module 901 is further configured to send third indication information to the network management device, where the third indication information is used to indicate whether the node is the IAB node.

Optionally, the sending module 901 is further configured to send fourth indication information to the network management device, where the fourth indication information includes a status of the cell served by the IAB node, and the status of the cell served by the IAB node includes: the cell is powered off or the cell is in a discontinuous reception DTX state.

Optionally, when the status of the cell served by the IAB node is that the cell is in the DTX state, the fourth indication information further includes SSB information of the cell served by the IAB node.

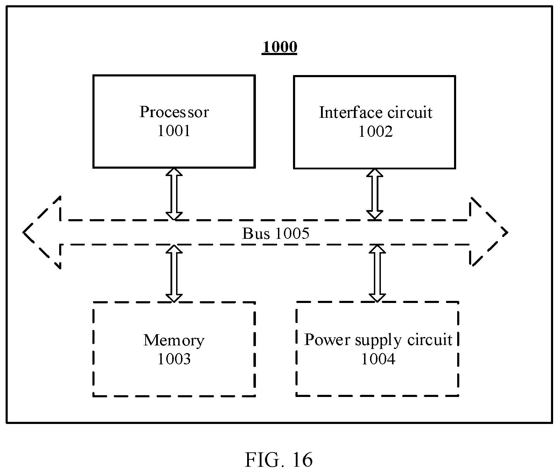

Based on a same technical concept, an embodiment of this application further provides an apparatus 1000. The following specifically describes a structure and a function of the apparatus 1000 with reference to a schematic block diagram of the apparatus 1000 in FIG. 16. The apparatus may include at least one processor 1001 and an interface circuit 1002. When related program instructions are executed in the at least one processor 1001, the apparatus 1000 may be enabled to implement the communication method and any possible design of the communication method provided in any one of the foregoing embodiments. The interface circuit 1002 may be configured to receive the program instructions and transmit the program instructions to the processor. Alternatively, the interface circuit 1002 may be used by the apparatus 1000 to communicate and interact with another communication device, for example, exchange control signaling and/or service data with another communication device. The interface circuit 1002 may be a code and/or data read and write interface circuit, or the interface circuit 1002 may be a signal transmission interface circuit between a communication processor and a transceiver. Optionally, the communication apparatus 1000 may further include at least one memory 1003, and the memory 1003 may be configured to store the related program instructions and/or data that are/is required. Optionally, the apparatus 1000 may further include a power supply circuit 1004. The power supply circuit 1004 may be configured to supply power to the processor 1001. The power supply circuit 1004 and the processor 1001 may be located in a same chip, or the power supply circuit 1004 may be located in a chip other than a chip in which the processor 1001 is located. Optionally, the apparatus 1000 may further include a bus 1005, and parts in the apparatus 1000 may be interconnected through the bus 1005.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

The transceiver apparatus, the interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. During actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: types of processing circuits that can execute the program instructions such as a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a SoC (system-on-a-chip, system-on-a-chip). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC or a PLD (programmable logic device, programmable logic device), where the PLD may further include an FPGA, a CPLD (complex programmable logic device, complex programmable logic device), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a SoPC (system-on-a-programmable-chip, system-on-a-programmable-chip).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

In the foregoing embodiments, the descriptions of each embodiment have respective focuses. For a part that is not described in detail in an embodiment, refer to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving, by a network management device, first information from an integrated access and backhaul IAB node;
generating, by the network management device, first configuration information of the IAB node based on the first information; and
sending, by the network management device, the first configuration information to the IAB node.

2. The method according to claim 1, wherein the first information comprises: cell information of a cell accessed by the IAB node, and/or a base station identifier of an IAB donor of the IAB node.

3. The method according to claim 2, wherein the cell information comprises at least one of the following: a cell identifier, a cell global identifier, and a physical cell identifier.

4. The method according to claim 1, wherein the first information comprises location information or neighboring cell information of the IAB node.

5. The method according to claim 4, wherein the first configuration information comprises X pieces of configuration information, the X pieces of configuration information respectively correspond to X candidate IAB donors, and X is a positive integer; and
the method further comprises:
receiving, by the network management device, third configuration information or an index corresponding to the third configuration information from the IAB node, wherein the third configuration information is determined by the IAB node based on the first configuration information, and there is a correspondence between the third configuration information and an IAB donor selected by the IAB node.

6. The method according to any one of claims 1 to 5, wherein the first configuration information comprises at least one of the following: a local internet protocol IP address of the IAB node on an F1 interface, a peer IP address of the IAB node on the F1 interface, and cell information of a cell served by the IAB node, wherein
a local end of the F1 interface is a distributed unit DU end of the IAB node, and a peer end of the F1 interface is a central unit CU end of the IAB donor of the IAB node.

7. The method according to any one of claims 1 to 6, wherein the generating, by the network management device, first configuration information of the IAB node based on the first information comprises:
determining, by the network management device, the IAB donor of the IAB node based on the first information; and
generating, by the network management device, the first configuration information based on the IAB donor.

8. The method according to claim 7, wherein the generating, by the network management device, the first configuration information based on the IAB donor comprises:
determining, by the network management device, the local IP address of the IAB node on the F1 interface based on an IAB donor-DU; and/or
determining, by the network management device based on an IAB donor-CU, the cell information of the cell served by the IAB node.

9. The method according to any one of claims 1 to 8, wherein when the first configuration information does not comprise the local IP address of the IAB node on the F1 interface, the method comprises:
further sending, by the network management device, first indication information to the IAB node, wherein the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, wherein X, Y, Z, M, and N are positive integers, the F1-C interface is a control plane interface of the F1 interface, and the F1-U interface is a user plane interface of the F1 interface.

10. The method according to claim 9, comprising:
receiving, by the network management device, second configuration information from the IAB node, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

11. The method according to any one of claims 1 to 10, comprising:
sending, by the network management device, a cell set to a target IAB donor of the IAB node; and
receiving, by the network management device, cell information from the IAB node, wherein the cell information is determined by the target IAB donor of the IAB node for the IAB node in the cell set.

12. The method according to any one of claims 1 to 11, comprising:
receiving, by the network management device, second indication information from the IAB node; and
determining, by the network management device based on the second indication information, that a physical cell identifier PCI of the IAB node remains unchanged.

13. The method according to any one of claims 1 to 12, comprising:
receiving, by the network management device, third indication information from a first node; and
determining, by the network management device based on the third indication information, that the first node is the IAB node or the IAB donor.

14. The method according to any one of claims 1 to 13, comprising:
receiving, by the network management device, fourth indication information from the IAB node, wherein the fourth indication information comprises a status of the cell served by the IAB node, and the status of the cell served by the IAB node comprises: the cell is powered off or the cell is in a discontinuous reception DTX state; and
determining, by the network management device based on the fourth indication information, the status of the cell served by the IAB node.

15. The method according to claim 14, wherein when the status of the cell served by the IAB node is that the cell is in the DTX state, the fourth indication information further comprises SSB information of the cell served by the IAB node.

16. A communication method, comprising:
sending, by an integrated access and backhaul IAB node, first information to a network management device; and
receiving, by the IAB node, first configuration information from the network management device.

17. The method according to claim 16, wherein the first information comprises: cell information of a cell accessed by the IAB node, and/or a base station identifier of an IAB donor of the IAB node.

18. The method according to claim 17, wherein the cell information comprises at least one of the following: a cell identifier, a cell global identifier, and a physical cell identifier.

19. The method according to claim 16, wherein the first information comprises location information or neighboring cell information of the IAB node.

20. The method according to claim 19, wherein the first configuration information comprises X pieces of configuration information, the X pieces of configuration information respectively correspond to X candidate IAB donors, and X is a positive integer; and
the method further comprises:
selecting, by the IAB node, an IAB donor;
determining, by the IAB node, configuration information that is in the first configuration information and that corresponds to the IAB donor as third configuration information; and
sending, by the IAB node, the third configuration information or an index corresponding to the third configuration information to the network management device.

21. The method according to any one of claims 16 to 20, wherein the first configuration information comprises at least one of the following: a local internet protocol IP address of the IAB node on an F1 interface, a peer IP address of the IAB node on the F1 interface, and cell information of a cell served by the IAB node, wherein
a local end of the F1 interface is a distributed unit DU end of the IAB node, and a peer end of the F1 interface is a central unit CU end of the IAB donor of the IAB node.

22. The method according to any one of claims 16 to 21, wherein when the first configuration information does not comprise the local IP address of the IAB node on the F1 interface, the method comprises:
further receiving, by the IAB node, first indication information from the network management device, wherein the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, wherein X, Y, Z, M, and N are positive integers, the F1-C interface is a control plane interface of the F1 interface, and the F1-U interface is a user plane interface of the F1 interface.

23. The method according to claim 22, comprising:
sending, by the IAB node, second information to the IAB donor, wherein the second information is used to request the IP address type from the IAB donor; or the second information is used to request the IP address prefix from the IAB donor; or the second information is used to request the X IP addresses from the IAB donor; or the second information is used to request, from the IAB donor, the Y IP addresses used for the F1-C interface or the F1-C service; or the second information is used to request, from the IAB donor, the Z IP addresses used for the F1-U interface or the F1-U service; or the second information is used to request, from the IAB donor, the IP address prefix used for the F1-C interface or the F1-C service; or the second information is used to request, from the IAB donor, the IP address prefix used for the F1-U interface or the F1-U service, wherein X, Y, Z, M, and N are positive integers, the F1-C interface is the control plane interface of the F1 interface, and the F1-U interface is the user plane interface of the F1 interface; and
receiving, by the IAB node, second configuration information from the IAB donor, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

24. The method according to claim 23, comprising:
sending, by the IAB node, the second configuration information to the network management device.

25. The method according to any one of claims 16 to 24, comprising:
sending, by the IAB node, cell information of the IAB node to the network management device, wherein the cell information is determined by a target IAB donor of the IAB node for the IAB node in a cell set, and the cell set is configured by the network management device for the target IAB donor of the IAB node.

26. The method according to any one of claims 16 to 25, comprising:
sending, by the IAB node, second indication information to the network management device, wherein
the second indication information comprises the location information of the IAB node and/or the neighboring cell information of the IAB node; or the second indication information is used to indicate that a PCI of the cell served by the IAB node remains unchanged.

27. The method according to any one of claims 16 to 26, comprising:
sending, by the IAB node, third indication information to the network management device, wherein
the third indication information is used to indicate whether the node is the IAB node.

28. The method according to any one of claims 16 to 27, comprising:
sending, by the IAB node, fourth indication information to the network management device, wherein
the fourth indication information comprises a status of the cell served by the IAB node, and the status of the cell served by the IAB node comprises: the cell is powered off or the cell is in a discontinuous reception DTX state.

29. The method according to claim 28, wherein when the status of the cell served by the IAB node is that the cell is in the DTX state, the fourth indication information further comprises SSB information of the cell served by the IAB node.

30. A communication method, comprising:
sending, by a network management device, first indication information to an integrated access and backhaul IAB node, wherein the first indication information is used to indicate an internet protocol IP address type requested by the IAB node from an IAB donor; or the first indication information is used to indicate an IP address prefix requested by the IAB node from an IAB donor; or the first indication information is used to indicate X IP addresses requested by the IAB node from an IAB donor; or the first indication information is used to indicate Y IP addresses that are used for an F1-C interface or an F1-C service and that are requested by the IAB node from an IAB donor; or the first indication information is used to indicate Z IP addresses that are used for an F1-U interface or an F1-U service and that are requested by the IAB node from an IAB donor; or the first indication information is used to indicate an IP address prefix that is used for an F1-C interface or an F1-C service and that is requested by the IAB node from an IAB donor; or the first indication information is used to indicate an IP address prefix that is used for an F1-U interface or an F1-U service and that is requested by the IAB node from an IAB donor, wherein X, Y, Z, M, and N are positive integers, the F1-C interface is a control plane interface of the F1 interface, and the F1-U interface is a user plane interface of the F1 interface.

31. The method according to claim 30, comprising:
receiving, by the network management device, second configuration information from the IAB node, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

32. A communication method, comprising:
sending, by an integrated access and backhaul IAB node, second information to an IAB donor, wherein the second information is used to request an internet protocol IP address type from the IAB donor; or the second information is used to request an IP address prefix from the IAB donor; or the second information is used to request X IP addresses from the IAB donor; or the second information is used to request, from the IAB donor, Y IP addresses used for an F1-C interface or an F1-C service; or the second information is used to request, from the IAB donor, Z IP addresses used for an F1-U interface or an F1-U service; or the second information is used to request, from the IAB donor, an IP address prefix used for an F1-C interface or an F1-C service; or the second information is used to request, from the IAB donor, an IP address prefix used for an F1-U interface or an F1-U service, wherein X, Y, Z, M, and N are positive integers, the F1-C interface is a control plane interface of the F1 interface, and the F1-U interface is a user plane interface of the F1 interface; and
receiving, by the IAB node, second configuration information from the IAB donor, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

33. The method according to claim 32, comprising:
sending, by the IAB node, the second configuration information to a network management device.

34. A communication method, comprising:
receiving, by a target IAB donor of an integrated access and backhaul IAB node, a handover request message from a source IAB donor of the IAB node, wherein the handover request message comprises configuration information of the IAB node;
generating, by the target IAB donor, fourth configuration information, wherein the fourth configuration information may comprise at least one of the following parameters: cell information of a cell served by the IAB node, a local internet protocol IP address of the IAB node on an F1 interface, a peer IP address of the IAB node on the F1 interface, IAB-DU identification information, SSB information of the cell served by the IAB node, system information of the cell served by the IAB node, indication information indicating whether the cell served by the IAB node is activated, and an IP address of a security gateway, wherein the F1 interface further comprises an F1-C interface and/or an F1-U interface; and
sending, by the target IAB donor, the fourth configuration information to the IAB node.

35. The method according to claim 34, comprising:
sending, by the target IAB donor, the fourth configuration information to a network management device.

36. The method according to claim 34 or 35, wherein the method further comprises:
receiving, by the target IAB donor, a cell set from the network management device.

37. The method according to claims 34 to 36, wherein the handover request message may further comprise the indication information used to indicate whether the cell served by the IAB node is currently activated.

38. A communication method, comprising:
sending, by an integrated access and backhaul IAB node, second indication information to a network management device or an IAB donor of the IAB node, wherein
the second indication information comprises location information of the IAB node and/or neighboring cell information of the IAB node; or the second indication information is used to indicate that a PCI of a cell served by the IAB node remains unchanged.

39. A communication method, comprising:
receiving, by a network management device or an IAB donor of an integrated access and backhaul IAB node, second indication information from the IAB node, wherein
the second indication information comprises location information of the IAB node and/or neighboring cell information of the IAB node; or the second indication information is used to indicate that a PCI of a cell served by the IAB node remains unchanged.

40. A communication method, comprising:
sending, by an integrated access and backhaul IAB node, third indication information to a network management device, wherein
the third indication information is used to indicate whether the node is the IAB node.

41. A communication method, comprising:
receiving, by a network management device, third indication information from an integrated access and backhaul IAB node, wherein
the third indication information is used to indicate whether the node is the IAB node.

42. A communication method, comprising:
sending, by an integrated access and backhaul IAB node, fourth indication information to a network management device, wherein
the fourth indication information comprises a status of a cell served by the IAB node, and the status of the cell served by the IAB node comprises: the cell is powered off or the cell is in a discontinuous reception DTX state.

43. The method according to claim 42, wherein when the status of the cell served by the IAB node is that the cell is in the DTX state, the fourth indication information further comprises SSB information of the cell served by the IAB node.

44. A communication method, comprising:
receiving, by a network management device, fourth indication information from an integrated access and backhaul IAB node, wherein
the fourth indication information comprises a status of a cell served by the IAB node, and the status of the cell served by the IAB node comprises: the cell is powered off or the cell is in a discontinuous reception DTX state.

45. The method according to claim 44, wherein when the status of the cell served by the IAB node is that the cell is in the DTX state, the fourth indication information further comprises SSB information of the cell served by the IAB node.

46. A communication apparatus, comprising:
an obtaining module, configured to receive first information from an integrated access and backhaul IAB node;
a processing module, configured to generate first configuration information of the IAB node based on the first information; and
a sending module, configured to send the first configuration information to the IAB node.

47. The apparatus according to claim 46, wherein the first information comprises: cell information of a cell accessed by the IAB node, and/or a base station identifier of an IAB donor of the IAB node.

48. The apparatus according to claim 47, wherein the cell information comprises at least one of the following: a cell identifier, a cell global identifier, and a physical cell identifier.

49. The apparatus according to claim 46, wherein the first information comprises location information or neighboring cell information of the IAB node.

50. The apparatus according to claim 49, wherein the first configuration information comprises X pieces of configuration information, the X pieces of configuration information respectively correspond to X candidate IAB donors, and X is a positive integer; and
the obtaining module is further configured to receive third configuration information or an index corresponding to the third configuration information from the IAB node, wherein the third configuration information is determined by the IAB node based on the first configuration information, and there is a correspondence between the third configuration information and an IAB donor selected by the IAB node.

51. The apparatus according to any one of claims 46 to 50, wherein the first configuration information comprises at least one of the following: a local internet protocol IP address of the IAB node on an F1 interface, a peer IP address of the IAB node on the F1 interface, and cell information of a cell served by the IAB node, wherein
a local end of the F1 interface is a distributed unit DU end of the IAB node, and a peer end of the F1 interface is a central unit CU end of the IAB donor of the IAB node.

52. The apparatus according to any one of claims 46 to 51, wherein
the processing module is specifically configured to determine the IAB donor of the IAB node based on the first information; and
the processing module is specifically configured to generate the first configuration information based on the IAB donor.

53. The apparatus according to claim 52, wherein
the processing module is specifically configured to determine the local IP address of the IAB node on the F1 interface based on an IAB donor-DU; and/or
the processing module is specifically configured to determine, based on an IAB donor-CU, the cell information of the cell served by the IAB node.

54. The apparatus according to any one of claims 46 to 53, wherein when the first configuration information does not comprise the local IP address of the IAB node on the F1 interface, the following operation is comprised:
the sending module is further configured to send first indication information to the IAB node, wherein the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, wherein X, Y, Z, M, and N are positive integers, the F1-C interface is a control plane interface of the F1 interface, and the F1-U interface is a user plane interface of the F1 interface.

55. The apparatus according to claim 54, wherein
the obtaining module is further configured to receive second configuration information from the IAB node, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

56. The apparatus according to any one of claims 46 to 55, wherein
the sending module is further configured to send a cell set to a target IAB donor of the IAB node; and
the obtaining module is further configured to receive cell information from the IAB node, wherein the cell information is determined by the target IAB donor of the IAB node for the IAB node in the cell set.

57. The apparatus according to any one of claims 46 to 56, wherein
the obtaining module is further configured to receive second indication information from the IAB node; and
the processing module is further configured to determine, based on the second indication information, that a physical cell identifier PCI of the IAB node remains unchanged.

58. The apparatus according to any one of claims 46 to 57, wherein
the obtaining module is further configured to receive third indication information from a first node; and
the processing module is further configured to determine, based on the third indication information, that the first node is the IAB node or the IAB donor.

59. The apparatus according to any one of claims 46 to 58, wherein
the obtaining module is further configured to receive fourth indication information from the IAB node, wherein the fourth indication information comprises a status of the cell served by the IAB node, and the status of the cell served by the IAB node comprises: the cell is powered off or the cell is in a discontinuous reception DTX state; and
the processing module is further configured to determine, based on the fourth indication information, the status of the cell served by the IAB node.

60. The apparatus according to claim 59, wherein when the status of the cell served by the IAB node is that the cell is in the DTX state, the fourth indication information further comprises SSB information of the cell served by the IAB node.

61. A communication apparatus, comprising:
a sending module, configured to send first information to a network management device; and
an obtaining module, configured to receive first configuration information from the network management device.

62. The apparatus according to claim 61, wherein the first information comprises: cell information of a cell accessed by the IAB node, and/or a base station identifier of an IAB donor of the IAB node.

63. The apparatus according to claim 62, wherein the cell information comprises at least one of the following: a cell identifier, a cell global identifier, and a physical cell identifier.

64. The apparatus according to claim 61, wherein the first information comprises location information or neighboring cell information of the IAB node.

65. The apparatus according to claim 64, wherein the first configuration information comprises X pieces of configuration information, the X pieces of configuration information respectively correspond to X candidate IAB donors, and X is a positive integer; and
the apparatus further comprises:
a processing module, configured to select an IAB donor, wherein
the processing module is further configured to determine configuration information that is in the first configuration information and that corresponds to the IAB donor as third configuration information; and
the sending module is further configured to send the third configuration information or an index corresponding to the third configuration information to the network management device.

66. The apparatus according to any one of claims 61 to 65, wherein the first configuration information comprises at least one of the following: a local internet protocol IP address of the IAB node on an F1 interface, a peer IP address of the IAB node on the F1 interface, and cell information of a cell served by the IAB node, wherein
a local end of the F1 interface is a distributed unit DU end of the IAB node, and a peer end of the F1 interface is a central unit CU end of the IAB donor of the IAB node.

67. The apparatus according to any one of claims 61 to 66, wherein when the first configuration information does not comprise the local IP address of the IAB node on the F1 interface, the following operation is comprised:
the obtaining module is further configured to receive first indication information from the network management device, wherein the first indication information is used to indicate an IP address type requested by the IAB node from the IAB donor; or the first indication information is used to indicate an IP address prefix requested by the IAB node from the IAB donor; or the first indication information is used to indicate X IP addresses requested by the IAB node from the IAB donor; or the first indication information is used to indicate Y IP addresses that are used for an F1-C interface or an F1-C service and that are requested by the IAB node from the IAB donor; or the first indication information is used to indicate Z IP addresses that are used for an F1-U interface or an F1-U service and that are requested by the IAB node from the IAB donor; or the first indication information is used to indicate an IP address prefix that is used for an F1-C interface or an F1-C service and that is requested by the IAB node from the IAB donor; or the first indication information is used to indicate an IP address prefix that is used for an F1-U interface or an F1-U service and that is requested by the IAB node from the IAB donor, wherein X, Y, Z, M, and N are positive integers, the F1-C interface is a control plane interface of the F1 interface, and the F1-U interface is a user plane interface of the F1 interface.

68. The apparatus according to claim 67, wherein
the sending module is further configured to send second information to the IAB donor, wherein the second information is used to request the IP address type from the IAB donor; or the second information is used to request the IP address prefix from the IAB donor; or the second information is used to request the X IP addresses from the IAB donor; or the second information is used to request, from the IAB donor, the Y IP addresses used for the F1-C interface or the F1-C service; or the second information is used to request, from the IAB donor, the Z IP addresses used for the F1-U interface or the F1-U service; or the second information is used to request, from the IAB donor, the IP address prefix used for the F1-C interface or the F1-C service; or the second information is used to request, from the IAB donor, the IP address prefix used for the F1-U interface or the F1-U service, wherein X, Y, Z, M, and N are positive integers, the F1-C interface is a control plane interface of the F1 interface, and the F1-U interface is a user plane interface of the F1 interface; and
the obtaining module is further configured to receive second configuration information from the IAB donor, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

69. The apparatus according to claim 68, wherein
the sending module is further configured to send the second configuration information to the network management device.

70. The apparatus according to any one of claims 61 to 69, wherein
the sending module is further configured to send cell information of the IAB node to the network management device, wherein the cell information is determined by a target IAB donor of the IAB node for the IAB node in a cell set, and the cell set is configured by the network management device for the target IAB donor of the IAB node.

71. The apparatus according to any one of claims 61 to 70, wherein
the sending module is further configured to send second indication information to the network management device, wherein
the second indication information comprises the location information of the IAB node and/or the neighboring cell information of the IAB node; or the second indication information is used to indicate that a PCI of the cell served by the IAB node remains unchanged.

72. The apparatus according to any one of claims 61 to 71, wherein
the sending module is further configured to send third indication information to the network management device, wherein
the third indication information is used to indicate whether the node is the IAB node.

73. The apparatus according to any one of claims 61 to 72, wherein
the sending module is further configured to send fourth indication information to the network management device, wherein
the fourth indication information comprises a status of the cell served by the IAB node, and the status of the cell served by the IAB node comprises: the cell is powered off or the cell is in a discontinuous reception DTX state.

74. The apparatus according to claim 73, wherein when the status of the cell served by the IAB node is that the cell is in the DTX state, the fourth indication information further comprises SSB information of the cell served by the IAB node.

75. A communication apparatus, comprising:
a sending module, configured to send first indication information to an integrated access and backhaul IAB node, wherein the first indication information is used to indicate an internet protocol IP address type requested by the IAB node from an IAB donor; or the first indication information is used to indicate an IP address prefix requested by the IAB node from an IAB donor; or the first indication information is used to indicate X IP addresses requested by the IAB node from an IAB donor; or the first indication information is used to indicate Y IP addresses that are used for an F1-C interface or an F1-C service and that are requested by the IAB node from an IAB donor; or the first indication information is used to indicate Z IP addresses that are used for an F1-U interface or an F1-U service and that are requested by the IAB node from an IAB donor; or the first indication information is used to indicate an IP address prefix that is used for an F1-C interface or an F1-C service and that is requested by the IAB node from an IAB donor; or the first indication information is used to indicate an IP address prefix that is used for an F1-U interface or an F1-U service and that is requested by the IAB node from an IAB donor, wherein X, Y, Z, M, and N are positive integers, the F1-C interface is a control plane interface of the F1 interface, and the F1-U interface is a user plane interface of the F1 interface.

76. The apparatus according to claim 75, comprising:
an obtaining module, configured to receive second configuration information from the IAB node, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

77. A communication apparatus, comprising:
a sending module, configured to send second information to an IAB donor, wherein the second information is used to request an internet protocol IP address type from the IAB donor; or the second information is used to request an IP address prefix from the IAB donor; or the second information is used to request X IP addresses from the IAB donor; or the second information is used to request, from the IAB donor, Y IP addresses used for an F1-C interface or an F1-C service; or the second information is used to request, from the IAB donor, Z IP addresses used for an F1-U interface or an F1-U service; or the second information is used to request, from the IAB donor, an IP address prefix used for an F1-C interface or an F1-C service; or the second information is used to request, from the IAB donor, an IP address prefix used for an F1-U interface or an F1-U service, wherein X, Y, Z, M, and N are positive integers, the F1-C interface is a control plane interface of the F1 interface, and the F1-U interface is a user plane interface of the F1 interface; and
an obtaining module, configured to receive second configuration information from the IAB donor, wherein
the second configuration information comprises at least one of the following information: the IP address prefix allocated by the IAB donor to the IAB node, the IP address allocated by the IAB donor to the IAB node, the IP address that is used for the F1-C interface or the F1-C service and that is allocated by the IAB donor to the IAB node, the IP address that is used for the F1-U interface or the 1-U service and that is allocated by the IAB donor to the IAB node, the IP address prefix that is used for the F1-C interface or the F1-C service and that is allocated by the IAB donor to the IAB node, and the IP address prefix that is used for the F1-U interface or the F1-U service and that is allocated by the IAB donor to the IAB node.

78. The apparatus according to claim 77, wherein
the sending module is configured to send the second configuration information to a network management device.

79. A communication apparatus, comprising:
an obtaining module, configured to receive a handover request message from a source IAB donor of the IAB node, wherein the handover request message comprises configuration information of the IAB node;
a processing module, configured to generate fourth configuration information, wherein the fourth configuration information may comprise at least one of the following parameters: cell information of a cell served by the IAB node, a local internet protocol IP address of the IAB node on an F1 interface, a peer IP address of the IAB node on the F1 interface, IAB-DU identification information, SSB information of the cell served by the IAB node, system information of the cell served by the IAB node, indication information indicating whether the cell served by the IAB node is activated, and an IP address of a security gateway, wherein the F1 interface further comprises an F1-C interface and/or an F1-U interface; and
the target IAB donor sends the fourth configuration information to the IAB node.

80. The apparatus according to claim 79, wherein
the sending module is configured to send the fourth configuration information to a network management device.

81. The apparatus according to claim 79 or 80, wherein the apparatus further comprises:
the obtaining module is configured to receive a cell set from the network management device.

82. The apparatus according to claims 79 to 81, wherein the handover request message may further comprise the indication information used to indicate whether the cell served by the IAB node is currently activated.

83. A communication apparatus, comprising:
a sending module, configured to send second indication information to a network management device or an IAB donor of the IAB node, wherein
the second indication information comprises location information of the IAB node and/or neighboring cell information of the IAB node; or the second indication information is used to indicate that a PCI of a cell served by the IAB node remains unchanged.

84. A communication apparatus, comprising:
an obtaining module, configured to receive second indication information from the IAB node, wherein
the second indication information comprises location information of the IAB node and/or neighboring cell information of the IAB node; or the second indication information is used to indicate that a PCI of a cell served by the IAB node remains unchanged.

85. A communication apparatus, comprising:
a sending module, configured to send third indication information to a network management device, wherein
the third indication information is used to indicate whether the node is the IAB node.

86. A communication apparatus, comprising:
an obtaining module, configured to receive third indication information from an integrated access and backhaul IAB node, wherein
the third indication information is used to indicate whether the node is the IAB node.

87. A communication apparatus, comprising:
a sending module, configured to send fourth indication information to a network management device, wherein
the fourth indication information comprises a status of a cell served by the IAB node, and the status of the cell served by the IAB node comprises: the cell is powered off or the cell is in a discontinuous reception DTX state.

88. The apparatus according to claim 42, wherein when the status of the cell served by the IAB node is that the cell is in the DTX state, the fourth indication information further comprises SSB information of the cell served by the IAB node.

89. A communication apparatus, comprising:
an obtaining module, configured to receive fourth indication information from an integrated access and backhaul IAB node, wherein
the fourth indication information comprises a status of a cell served by the IAB node, and the status of the cell served by the IAB node comprises: the cell is powered off or the cell is in a discontinuous reception DTX state.

90. The apparatus according to claim 44, wherein when the status of the cell served by the IAB node is that the cell is in the DTX state, the fourth indication information further comprises SSB information of the cell served by the IAB node.

91. A communication apparatus, comprising at least one processor and an interface, wherein the interface is configured to receive and/or send a signal, and the processor is configured to enable the method according to any one of claims 1 to 15, 30 and 31, 39, 41, and 44 and 45 to be performed.

92. A communication apparatus, comprising at least one processor and an interface, wherein the interface is configured to receive and/or send a signal, and the processor is configured to enable the method according to any one of claims 16 to 29, 32 and 33, 38, 40, and 42 and 43 to be performed.

93. A communication apparatus, comprising at least one processor and an interface, wherein the interface is configured to receive and/or send a signal, and the processor is configured to enable the method according to any one of claims 34 to 37, and 39 to be performed.

94. A communication system, comprising the communication apparatus according to at least one of claims 91 to 93.

95. A computer-readable storage medium, wherein the computer-readable storage medium stores computer program instructions; and when the computer program instructions are run by a processor, the method according to any one of claims 1 to 45 is implemented.

96. A computer program product, wherein the computer program product comprises computer program instructions; and when the computer program instructions are run by a processor, the method according to any one of claims 1 to 45 is implemented.
